# EUROPÄISCHE PATENTSCHRIFT

(11) **EP 3 541 491 B1**
(45) Veröffentlichungstag und Bekanntmachung des Hinweises auf die Patenterteilung: **18.03.2020**
(21) Anmeldenummer: 18703200.8
(22) Anmeldetag: 03.01.2018
(51) Int. Cl.: B01D 33/333, B01D 33/50, B01D 33/41

(54) **SIEBVORRICHTUNG MIT VERSCHWENKBAREN SIEBFELDERN**
SCREENING DEVICE HAVING PIVOTABLE SCREENING PANELS
DISPOSITIF DE CRIBLAGE COMPORTANT DES ZONES DE CRIBLAGE PIVOTANTES

(30) Priorität: 18.01.2017 DE 102017100952
(43) Veröffentlichungstag der Anmeldung: 25.09.2019
(73) Patentinhaber: Aqseptence Group GmbH, 65326 Aarbergen (DE)
(72) Erfinder: HEIL, Klaus, 76889 Schweigen-Rechtenbach (DE)
(74) Vertreter: Jany, Peter
(86) Internationale Anmeldenummer: PCT/EP2018/050123
(87) Internationale Veröffentlichungsnummer: WO 2018/134047

(56) Entgegenhaltungen:
- WO-A1-01/08780
- WO-A1-2007/028209
- US-A- 4 692 242
- US-A1- 2011 108 476

## Beschreibung

Die Erfindung betrifft eine Siebvorrichtung zum mechanischen Abscheiden und Herausfördern von festen Bestandteilen, Festkörpern oder Feststoffen aus dem Flüssigkeitsstrom einer in einem Gerinne fließenden Flüssigkeit, insbesondere Sieb- oder Filterrechen für Prozess-, Kühl- oder Abwasserströmungen oder in Klär- oder Wasserkraftanlagen, nach dem Oberbegriff des Anspruchs 1.

Derartige Siebvorrichtungen weisen üblicherweise eine Anzahl von im Wesentlichen quer zur Fließrichtung des Flüssigkeitsstroms ausgerichteten Siebfeldern auf, die jeweils eine Siebfläche mit einer Vielzahl von Siebflächenöffnungen haben, wobei die Siebfelder ein umlaufendes, teilweise in den Flüssigkeitsstrom eintauchbares Endlossiebband bilden, in dem mehrere in Bewegungsrichtung des Endlossiebbandes aufeinanderfolgende, nebeneinander angeordnete Siebfelder eine gemeinsame Siebfläche in dem Gerinne bilden, sowie einen Antrieb zum Antreiben des Endlossiebbandes in einer Umlaufbewegung, wodurch das Abscheiden und Herausfördern der Feststoffe aus dem Flüssigkeitsstrom vorzugsweise kontinuierlich erfolgen kann. Das Endlossiebband überdeckt bei sogenannten querdurchströmten Ausführungen in aller Regel den Querschnitt des Flüssigkeitsstroms vollständig oder ist zumindest mit seitlichen Abdichtungen gegen das Umströmen gesichert, sodass die Feststoffe die Siebvorrichtung nicht passieren können, sofern ihre Abmessungen größer als die Spalt- oder Maschenweite der Siebfelder sind, und sich an den Siebflächen der Siebfelder abscheiden.

Durch die Umlaufbewegung des Endlossiebbandes werden die an den Siebfeldern abgeschiedenen Feststoffe aus der Flüssigkeitsströmung nach oben gefördert und an einer über dem Wasserspiegel liegenden Abwurfstelle von den Siebfeldern abgeworfen, abgenommen oder abgereinigt. Mittels Abspritzen der Siebfelder an der Abwurfstelle kann eine vollständige Siebfeldabreinigung erfolgen, bevor die Siebfelder wieder in den Flüssigkeitsstrom eintauchen.

Solche Siebvorrichtungen sind in verschiedenen Ausgestaltungen bekannt, die als "querdurchströmt", "von innen nach außen" oder als "von außen nach innen" bezeichnet werden. Ein Beispiel einer querdurchströmten Siebvorrichtung ist aus der DE 197 27 354 A1 bekannt. Sie weist Siebfelder auf, die in dem Endlossiebband derart aufeinanderfolgend angeordnet sind, dass die Umlaufbewegung des Endlossiebbandes in zwei zueinander beabstandeten, parallelen Ebenen erfolgt, wobei die Siebfelder in der stromaufwärts liegenden Ebene nach oben aus dem Gerinne heraus und in der stromabwärts liegenden Ebene nach unten in das Gerinne hinein bewegt werden. Dabei werden die Siebfelder am höchsten und niedrigsten Punkt um Schwenkachsen des Endlossiebbandes verschwenkt, die quer zu dem Gerinne in einer Ebene parallel zu dem Wasserspiegel liegen, d. h. quer zur Strömungsrichtung in einer zu den Siebflächen parallelen Ebene. Die Siebfläche der Siebfelder weist jeweils einen geneigten vorderen und einen geneigten hinteren Siebflächenanteil auf, die durch einen mittleren, flachen Siebflächenanteil verbunden sind. Durch diesen Aufbau erhöht sich die Stabilität der Siebfelder. Ferner können in der flachen Mulde, die von dem hinteren Siebflächenanteil eines Siebfeldes mit dem vorderen Siebflächenanteil eines in Umlaufrichtung nachlaufenden Siebfeldes gebildet wird, Feststoffteile aufgenommen und ausgetragen werden, wodurch das Siebvermögen der Siebvorrichtung insgesamt verbessert ist, jedoch nicht das Siebvermögen der einzelnen Siebfelder selbst.

Aus der DE 39 28 681 A1 ist eine nicht gattungsgemäße Siebvorrichtung bekannt, die nicht für das Herausfördern von Schmutz aus einem Flüssigkeitsstrom in einem Gerinne, sondern für ein Abwasserbecken vorgesehen ist, und nicht mehrere, eine gemeinsame Siebfläche bildende Siebfelder, sondern nur ein Siebfeld aufweist, das ferner nicht in einer Umlaufbewegung in einen Flüssigkeitsstrom getaucht und aus diesem herausgehoben wird, sondern stationär in dem Abwasserbecken angeordnet ist. Die Siebfläche des statisch angeordneten Siebfeldes ist zur Erhöhung seiner nutzbaren Oberfläche faltenförmig ausgebildet.

Eine besondere Ausführungsform einer Siebvorrichtung, auf deren Weiterbildung sich die Erfindung richtet, ist aus der WO 01/08780 A1 bekannt. Sie weist Siebfelder auf, die in dem Endlossiebband derart aufeinanderfolgend angeordnet sind, dass die Umlaufbewegung des Endlossiebbandes im Wesentlichen insgesamt innerhalb einer einzigen Ebene gehalten ist, wobei die Schwenkachsen, um die die Siebfelder an Umlenkpunkten des Endlossiebbandes verschwenkt werden, senkrecht zur gemeinsamen Siebfläche liegen. Die von dem Flüssigkeitsstrom durchströmten Siebfelder sind flach. Um von den Siebfeldern herabfallenden Schmutz oder Feststoffe mit aus der Flüssigkeit herauszufördern und damit das Siebvermögen der gesamten Siebvorrichtung zu verbessern, können sie an ihrem in Bewegungsrichtung hinteren Ende eine Schmutztasche aufweisen, die beispielsweise durch eine Abkantung eines Profilrahmens gebildet sein kann, aber nicht zur Siebwirkung der Siebfelder beiträgt, weil sie nicht von dem Flüssigkeitsstrom durchströmt wird.

Die aus der WO 01/08780 A1 bekannte Siebvorrichtung weist gegenüber den anderen bekannten Ausführungsformen zahlreiche Vorteile auf. Allerdings besteht in der Praxis die Anforderung, sie weiter zu verbessern, insbesondere hinsichtlich eines möglichst geringen Druckverlustes im Flüssigkeitsstrom.

Ausgehend von diesem Stand der Technik liegt der vorliegenden Erfindung die Aufgabe zugrunde, eine Siebvorrichtung der eingangs genannten Art zu schaffen, die einen möglichst geringen Druckverlust im Flüssigkeitsstrom aufweist, und dabei weiterhin eine, in Fließrichtung des Flüssigkeitsstroms gesehen, geringe Baulänge der Siebvorrichtung und einen einfachen Aufbau des Endlossiebbandes aufweist.

Diese Aufgabe wird erfindungsgemäß durch eine Siebvorrichtung mit den Merkmalen des beigefügten Anspruchs 1 gelöst. Bevorzugte Ausgestaltungen und Weiterbildungen der Erfindung ergeben sich aus den abhängigen Ansprüchen und der nachfolgenden Beschreibung mit zugehörigen Zeichnungen.

Eine erfindungsgemäße Siebvorrichtung zum mechanischen Abscheiden und Herausfördern von festen Bestandteilen, Festkörpern oder Feststoffen aus dem Flüssigkeitsstrom einer in einem Gerinne fließenden Flüssigkeit, insbesondere Sieb- oder Filterrechen für Prozess-, Kühl- oder Abwasserströmungen oder in Klär- oder Wasserkraftanlagen, umfasst also eine Anzahl von im Wesentlichen quer zur Fließrichtung des Flüssigkeitsstroms ausgerichteten Siebfeldern, die jeweils eine Siebfläche mit einer Vielzahl von Siebflächenöffnungen aufweisen, wobei die Siebfelder ein umlaufendes, teilweise in den Flüssigkeitsstrom eintauchbares Endlossiebband bilden, in dem mehrere in Bewegungsrichtung des Endlossiebbandes aufeinanderfolgende, nebeneinander angeordnete Siebfelder eine gemeinsame Siebfläche in dem Gerinne bilden, sowie einen Antrieb zum Antreiben des Endlossiebbandes in einer Umlaufbewegung, wobei die Siebfelder in dem Endlossiebband derart aufeinanderfolgend angeordnet sind, dass die Umlaufbewegung des Endlossiebbandes im Wesentlichen insgesamt innerhalb einer einzigen Ebene gehalten ist, und wobei die Schwenkachsen, um die die Siebfelder an Umlenkpunkten des Endlossiebbandes verschwenkt werden, senkrecht zur gemeinsamen Siebfläche liegen, und weist die Besonderheit auf, dass sie Siebfelder umfasst, deren Siebfläche eine Vielzahl nebeneinander über die Siebfläche verlaufender Vertiefungen und/oder Erhebungen aufweist.

Die Siebfelder einer erfindungsgemäßen Siebvorrichtung weisen im Unterschied zu der aus der WO 01/08780 A1 bekannten Siebvorrichtung statt einer glatten bzw. ebenen Siebfläche eine Siebfläche mit einer Vielzahl von nebeneinander quer über die Siebfläche verlaufenden Vertiefungen und/oder Erhebungen auf. Die Vertiefungen können auch als Siebflächentäler und die Erhebungen als Siebflächenkämme oder Siebflächenberge bezeichnet werden. Sie können auf der Anströmseite (der Schmutzwasserseite) oder auf der Abströmseite (der Reinwasserseite) der Siebfelder oder auf beiden Seiten ausgebildet sein. Die Erfindung hat den Vorteil, dass die Orientierung der Vertiefungen und/oder Erhebungen, d.h. die Richtung ihrer Längserstreckung, quer (d.h. horizontal), parallel (d.h. vertikal) oder schräg zur Bewegungsrichtung des Endlossiebbandes sein kann, bezogen auf die Lage der Siebfelder bei ihrer Aufwärtsbewegung in dem Endlossiebband aus der Flüssigkeit in dem Gerinne. Auch Ausbildungen mit einer Kombination einer oder mehrerer dieser Orientierungen sind möglich, sowohl bezogen auf die Ausbildung der Siebfläche eines Siebfeldes als auch auf die gesamte Siebvorrichtung, die in besonderen Ausführungsformen Siebfelder mit unterschiedlich orientierten Vertiefungen und/oder Erhebungen aufweisen kann, um eine Siebvorrichtung zu bilden, die durch die unterschiedlichen Siebfelder, beispielsweise besonders für einen speziellen Fischschutz oder eine spezielle Rückhalteeigenschaft für unterschiedliche aus dem Flüssigkeitsstrom abzuscheidende und herauszufördernde Bestandteile, optimiert ist. Die erfindungsgemäße Siebvorrichtung kann somit sehr variabel für den jeweiligen Anwendungszweck ausgestaltet sein.

Bei einer Siebvorrichtung sind vorteilhafterweise alle Siebfelder mit Vertiefungen und/oder Erhebungen versehen, in besonderen Ausführungsformen können aber auch einzelne oder mehrere Siebfelder nach dem Stand der Technik, d.h. mit glatten bzw. ebenen Siebflächen vorgesehen sein. Die erfindungsgemäße Siebvorrichtung kann somit auch diesbezüglich sehr variabel für den jeweiligen Anwendungszweck angepasst werden.

Die über die Siebfläche verlaufenden Vertiefungen und/oder Erhebungen bilden eine Art Faltung der Siebfläche. Ein Vorteil ist, dass durch die Falten die Siebfläche gegenüber einer glatten bzw. ebenen Siebfläche gleicher Außenmaße vergrößert ist. Durch die Formgebung der Siebfläche wird die effektive Siebfläche eines Siebfeldes vergrößert. Da der Durchsatz durch die Siebvorrichtung gleich dem Produkt aus Strömungsgeschwindigkeit des Flüssigkeitsstromes und gesamter Siebfläche der Siebvorrichtung ist, erhöht sich somit bei einer erfindungsgemäßen Siebvorrichtung der Durchsatz bei gleicher Baugröße der Siebvorrichtung. Zum Erzielen eines vorgegebenen Durchsatzes können daher die Siebvorrichtung und das zugehörige Bauwerk in dem Gerinne kleiner als nach dem Stand der Technik ausgebildet sein, wodurch sich für den Anwender die Baukosten verringern.

Die erfindungsgemäße Siebvorrichtung hat jedoch nicht nur den Vorteil einer variablen Gestaltung der Siebfelder und eines höheren Durchsatzes, sondern weist weitere spezifische Vorteile auf, die gegenüber einer gattungsgemäßen Siebvorrichtung erzielt werden.

Hierzu gehört zum einen ein höherer Schmutzaustrag der festen Bestandteile, Festkörper oder Feststoffe aus dem Flüssigkeitsstrom. Die Erhöhungen bzw. Vertiefungen auf einer Siebfläche dienen als viele einzelne Schmutzmitnehmer für auf der Siebfläche abgeschiedenen Schmutz, der nicht auf der Siebfläche abwärts rutscht, sondern eine von der Siebfläche gehaltene Schmutzmatte bildet. Daraus resultiert ein höherer Belegungsgrad der Siebflächen mit Schmutz, d.h. auf einer Siebfläche mit Erhöhungen bzw. Vertiefungen kann mehr Schmutz als auf einer ebenen bzw. glatten Siebfläche abgeschieden und dann bei der Umlaufbewegung des Endlossiebbandes durch das Siebfeld aus dem Flüssigkeitsstrom gefördert werden. Dieser Vorteil ergibt sich insbesondere, aber nicht nur, bei einer Orientierung der Vertiefungen und/oder Erhebungen, d.h. der Richtung ihrer Längserstreckung, die quer zur Bewegungsrichtung des Endlossiebbandes (d.h. horizontal) ist, bezogen auf die Lage der Siebfelder bei ihrer Aufwärtsbewegung in dem Endlossiebband aus der Flüssigkeit in dem Gerinne.

Ein weiterer spezifischer Vorteil ist ein verringerter hydraulischer Widerstand der Siebvorrichtung für den Flüssigkeitsstrom. Da, wie vorstehend beschrieben, durch die Vielzahl der als Schmutzmitnehmer dienenden Erhöhungen bzw. Vertiefungen die Schmutzteile nicht auf der Siebfläche nach unten rutschen und sich am unteren Rand der Siebfläche ansammeln, resultiert eine gleichmäßig verteilte Schmutzbelegung über die gesamte Siebfläche eines Siebfeldes. Aufgrund der gleichmäßig verteilten Schmutzbelegung gibt es keine lokal überhöhten oder lokal sehr variierenden Fließgeschwindigkeiten in der Siebfläche und dadurch weniger Turbulenzen. Dies hat sowohl den Vorteil eines geringeren hydraulischen Widerstandes der Siebvorrichtung in dem Gerinne als auch einer geringeren Schmutzablösung von der Siebfläche durch Strömungsturbulenzen, was wiederum den Schmutzaustrag verbessert.

Ein anderer spezifischer Vorteil ist die höhere Stabilität der Siebfelder und Siebflächen. Durch die erfindungsgemäße Formgebung werden die Siebfelder bzw. Siebflächen versteift, sodass eine auch für sehr hohe Wasserdrücke ausreichende Festigkeit erzielt wird. Die erfindungsgemäße Siebvorrichtung kann daher auch in Anwendungsfällen eingesetzt werden, die bei einer gattungsgemäßen Siebvorrichtung aufgrund eines hohen Wasserdrucks nicht möglich waren. Die höhere Stabilität der Siebfelder und Siebflächen hat auch den weiteren Vorteil, dass die Siebfelder bzw. die Siebflächen aus weniger massivem bzw. festem Material aufgebaut werden können, sodass sowohl eine Materialeinsparung als auch eine Verbesserung des Durchflusses erzielt wird. Wenn die Siebflächen beispielsweise als Drahtgewebe ausgebildet sind, wird das Drahtgewebe durch die erfindungsgemäße Formgebung versteift. Infolgedessen können dünnere Drähte eingesetzt werden, wodurch bei gleicher Festigkeit nicht nur eine Materialeinsparung erzielt, sondern auch eine größere für die Durchströmung zur Verfügung stehende freie Fläche gebildet wird.

Ein ebenfalls spezifischer Vorteil ergibt sich hinsichtlich einer effektiven Abreinigung der Siebfelder. Der an den Siebflächen anhaftende und aus dem Flüssigkeitsstrom heraus geförderte Schmutz wird in der Regel durch Absprühen der aus dem Flüssigkeitsstrom herausgehobenen Siebfelder des Endlossiebbandes mittels Wasser- oder Druckluft-Sprühdüsen von den Siebfeldern abgesprüht und von einer auf der den Sprühdüsen gegenüberliegenden Seite des Endlossiebbandes angeordneten Schmutzauffangrinne aufgenommen. Durch die schrägen Flanken der Erhebungen und/oder Vertiefungen in den Siebflächen wird der abgesprühte Schmutz in Richtung zu der Schmutzauffangrinne geleitet, wobei die Flanken den Schmutz rampenartig zur Schmutzauffangrinne führen. Dadurch wird ein höherer Anteil des abgespritzten Schmutzes von der Schmutzauffangrinne aufgefangen.

Auch hinsichtlich der Fischschutzes hat die Erfindung spezifische Vorteile. Bei derartigen Siebvorrichtungen stellt sich nämlich das Problem, dass sich nicht nur feste Bestandteile, Festkörper oder Feststoffe in den Siebfeldern festsetzen und durch die Siebvorrichtung aus dem Gerinne ausgesiebt und ausgetragen werden, sondern sich auch Wassertiere wie Fische, Krebse, Larven etc. in den Siebflächen der Siebfelder oder in darin abgeschiedenen Feststoffen verfangen und zusammen mit diesen Feststoffen aus dem Gerinne ausgesiebt werden. Bei einer erfindungsgemäßen Siebvorrichtung ist der Aufprall der Fische auf den Siebfeldern wegen der schrägen Flanken der Erhebungen bzw. Vertiefungen der Siebfelder gedämpft, sodass sie weniger verletzt oder getötet werden.

Um eine möglichst schonende Behandlung von der Siebvorrichtung aus dem Gerinne herausgeförderter Wassertiere und deren Rückführung in das Gerinne zu ermöglichen, umfasst die erfindungsgemäße Siebvorrichtung ferner Siebfelder, die auf ihrer Anströmseite jeweils eine Fischheberinne aufweisen, wobei die Fischheberinne derart angeordnet und ausgebildet ist, dass sie sich bei den aufwärts bewegenden Siebfeldern am unteren Ende befindet, sie bei den sich aufwärts bewegenden Siebfeldern jeweils eine mit Flüssigkeit gefüllte Auffangvertiefung für in dem jeweiligen Siebfeld befindliche Wassertiere bildet, die bei der Bewegung des Endlossiebbandes mit dem Siebfeld, mit der in der Auffangvertiefung enthaltenen Flüssigkeit und mit in der Flüssigkeit aufgefangenen Wassertieren in der Bewegungsrichtung des Endlossiebbandes aus dem Flüssigkeitsstrom herausgehoben wird, und im oberen Umlenkbereich des Endlossiebbandes in einem Entleerungsbereich der Siebvorrichtung durch eine Verkippung des Siebfeldes und der Auffangvertiefung in eine Auffangsammelrinne ausgeleert wird, wobei der Reinigungsbereich mit der Sprüheinrichtung zum Abreinigen des Schmutzes in der Bewegungsrichtung des Endlossiebbandes so weit hinter dem Entleerungsbereich angeordnet ist, dass die Auffangvertiefungen entleert werden, bevor sie den Reinigungsbereich erreichen. Dadurch können mit der Siebvorrichtung aus dem Gerinne herausgesiebte Fische in das Gerinne zurückgeführt werden.

Dieser Vorteil ergibt sich insbesondere, aber nicht nur, wenn die Orientierung der Vertiefungen und/oder Erhebungen, d.h. die Richtung ihrer Längserstreckung, in etwa parallel zur Bewegungsrichtung des Endlossiebbandes (d.h. vertikal) ist, bezogen auf die Lage der Siebfelder bei ihrer Aufwärtsbewegung in dem Endlossiebband aus der Flüssigkeit in dem Gerinne, weil in diesem Fall die Fische bei der Aufwärtsbewegung der Siebfelder entlang der Längserstreckung der Vertiefungen bzw. Erhebungen in die jeweilige Auffangvertiefung rutschen und geleitet werden können und danach in dem Entleerungsbereich die Vertiefungen bzw. Erhebungen in etwa horizontal angeordnet sind, sodass dort die Flanken der Erhebungen bzw. Vertiefungen für die Fische eine schonende und führende Rampe zur Auffangsammelrinne bilden.

Die Erfindung wird nachfolgend anhand in den Figuren dargestellter Ausführungsbeispiele näher erläutert. Die darin beschriebenen Besonderheiten können einzeln oder in Kombination miteinander eingesetzt werden, um bevorzugte Ausgestaltungen der Erfindung zu schaffen. Gleiche oder gleich wirkende Teile werden in den verschiedenen Figuren mit denselben Bezugszeichen bezeichnet und gewöhnlich nur einmal beschrieben, auch wenn sie bei anderen Ausführungsformen vorteilhaft eingesetzt werden können. Es zeigen:
- Fig. 1: eine schematische Frontansicht einer Siebvorrichtung,
- Fig. 2: eine erste Ausführungsform eines Endlossiebbandes zu Fig. 1,
- Fig. 3: eine zweite Ausführungsform eines Endlossiebbandes zu Fig. 1,
- Fig. 4: eine Einzelheit des Endlossiebbandes von Fig. 2 aus einem geraden Bereich des Endlossiebbandes,
- Fig. 5: eine Einzelheit des Endlossiebbandes von Fig. 2 aus dem unteren Umlenkbereich des Endlossiebbandes,
- Fig. 6: eine Einzelheit des Endlossiebbandes von Fig. 3 aus einem geraden Bereich des Endlossiebbandes,
- Fig. 7: eine Einzelheit des Endlossiebbandes von Fig. 3 aus dem unteren Umlenkbereich des Endlossiebbandes,
- Fig. 8: ein Siebfeld des Endlossiebbandes von Fig. 2,
- Fig. 9: die Siebfläche des Siebfeldes von Fig. 8,
- Fig. 10: ein Siebfeld des Endlossiebbandes von Fig. 3,
- Fig. 11: die Siebfläche des Siebfeldes von Fig. 10,
- Fig. 12: eine Einzelheit zu Fig. 6,
- Fig. 13: das Profil einer wellenförmig ausgebildeten Siebfläche,
- Fig. 14: das Profil einer wellen- bzw. evolventenartig ausgebildeten Siebfläche,
- Fig. 15: das Profil einer sägezahnförmig ausgebildeten Siebfläche und
- Fig. 16: das Profil einer trapezförmig ausgebildeten Siebfläche.

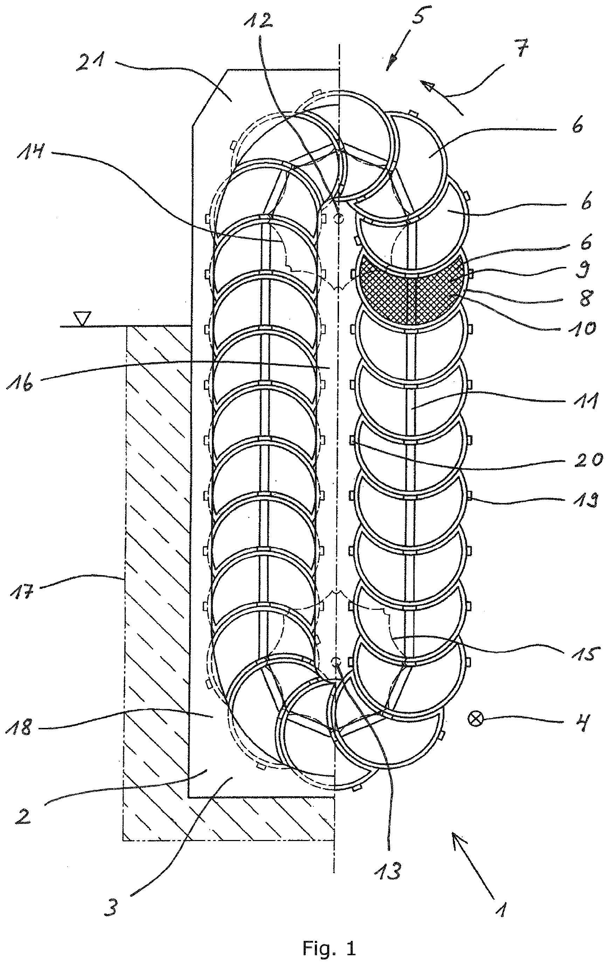

Die Figur 1 veranschaulicht eine erfindungsgemäße Siebvorrichtung 1 anhand einer gattungsgemäßen Siebvorrichtung gemäß der WO 01/08780 A1. Sie zeigt eine schematische Frontansicht einer erfindungsgemäßen Siebvorrichtung 1 zum mechanischen Abscheiden und Herausfördern von festen Bestandteilen, Festkörpern oder Feststoffen aus dem Flüssigkeitsstrom 2 einer in einem Gerinne 3 in der Fließrichtung 4 fließenden Flüssigkeit mit einem Endlossiebband 5, wobei die rechte Hälfte der Figur 1 das Endlossiebband 5 ohne weitere Bestandteile der Siebvorrichtung 1 oder ihrer Umgebung zeigt. Das Endlossiebband 5 ist quer zur Fließrichtung 4 angeordnet und wird von dem Flüssigkeitsstrom 2 senkrecht zur Zeichnungsebene durchströmt. Es umfasst eine Anzahl von im Wesentlichen quer zur Fließrichtung 4 des Flüssigkeitsstroms 2 ausgerichteten Siebfeldern 6, die das umlaufende, teilweise in den Flüssigkeitsstrom 2 eintauchbare Endlossiebband 5 bilden. In dem Endlossiebband 5 bilden die in Bewegungsrichtung des Endlossiebbandes 5 aufeinanderfolgenden, nebeneinander angeordneten Siebfelder 6 eine gemeinsame Siebfläche in dem Gerinne 3.

Die Geometrie der Siebvorrichtung 1 ist vorzugsweise so gewählt, dass der sich aufwärts bewegende Teil des umlaufenden Endlossiebbandes 5 und der sich abwärts bewegende Teil des umlaufenden Endlossiebbandes 5 jeweils etwa eine rechte bzw. linke Hälfte des Flüssigkeitsstroms 2 abdecken. Der Flüssigkeitsstrom 2 durchströmt in der Fließrichtung 4 die Siebvorrichtung 1 bzw. die in den Flüssigkeitsstrom 2 eingetauchten Siebfelder 6 und wird dabei durch Sieben gereinigt.

Die Siebvorrichtung 1 umfasst einen nicht dargestellten Antrieb zum Antreiben des Endlossiebbandes 5 in einer Umlaufbewegung 7, deren Richtung durch den Pfeil veranschaulicht ist. Die Siebfelder 6 sind in dem Endlossiebband 5 derart aufeinanderfolgend angeordnet, dass die Umlaufbewegung 7 des Endlossiebbandes 5 im Wesentlichen insgesamt innerhalb einer einzigen Ebene gehalten ist, wobei die Schwenkachsen, um die die Siebfelder 6 an Umlenkpunkten des Endlossiebbandes 5 verschwenkt werden, senkrecht zur gemeinsamen Siebfläche liegen. Die Ebene der Umlaufbewegung 7 der Siebfelder 6 ist vorzugsweise im Wesentlichen senkrecht zur Fließrichtung 4 des Flüssigkeitsstroms 2 angeordnet, das heißt, die Schwenkachsen, um die die Siebfelder an Umlenkpunkten des Endlossiebbandes verschwenkt werden und die senkrecht zur gemeinsamen Siebfläche liegen, sind parallel zur Fließrichtung 4 des Flüssigkeitsstroms 2 ausgerichtet und die Siebvorrichtung 1 bzw. die Ebene, innerhalb der die Umlaufbewegung 7 des Endlossiebbandes 5 gehalten ist, und die gemeinsame Siebfläche sind senkrecht in dem Gerinne 3 angeordnet. In besonderen Ausführungsformen kann die Siebvorrichtung 1 aber auch schrägstehend statt vorzugsweise senkrecht in dem Gerinne 3 angeordnet sein.

Die Siebfelder 6 umfassen jeweils einen Siebfeldrahmen 8 und eine von dem Siebfeldrahmen 8 getragene Siebfläche 9, die eine Vielzahl von Siebflächenöffnungen 10 aufweisen. Aus Gründen der Übersichtlichkeit sind nur bei einem der dargestellten Siebfelder 6 dessen Siebflächenöffnungen 10 veranschaulicht.

Die Siebfelder 6 sind in Figur 1 sichelförmig ausgebildet. Hierunter wird im Wesentlichen eine Form verstanden, bei der das in Richtung der Umlaufbewegung 7 der Siebfelder 6 betrachtete vordere und hintere Ende eines Siebfeldes 6 die Kontur eines Abschnitts eines Kreisbogens aufweist, wobei bevorzugt die Radien der die Außenkontur am vorderen und hinteren Ende erzeugenden Kreise gleich sind. Diese Ausführungsform hat den Vorteil, dass die Siebfelder 6 aufeinanderfolgend und entlang der von den Kreisabschnitten gebildeten Außenkontur in permanentem Kontakt aneinander liegend, mit einem kleinen Spaltabstand zueinander oder mit Abdichtelementen gegeneinander abgedichtet sowohl geradlinig bewegt als auch um eine Umlenkung umgelenkt werden können, ohne dass sich bei einer Veränderung der Bewegungsrichtung der Siebfelder 6, beispielsweise bei der Umlenkung, zwischen benachbarten Siebfeldern 6 ein Spalt bildet, durch den Flüssigkeit ungesiebt hindurchtreten kann.

Gemäß einer ersten Ausführungsform, die in Figur 1 dargestellt ist, sind die sichelförmig ausgebildeten Siebfelder 6 vorzugsweise so geformt, dass ihre Außenkonturen jeweils von zwei sich schneidenden Abschnitten zweier Kreise mit identischem Radius gebildet sind, wobei der Mittelpunkt des ersten Kreises, der den konvexen Abschnitt der Außenkontur des Siebfeldes 6 bildet, auf dem zweiten Kreis liegt, der den konkaven Abschnitt der Außenkontur des Siebfeldes 6 bildet. Aufgrund dieser Geometrie ist es möglich, dass die Siebfelder 6 innerhalb der Ebene von deren Wirkfläche gegeneinander verschwenkt werden können, ohne Lücken zwischen ihnen entstehen zu lassen und ohne dass sich die Siebfelder 6 beim Verschwenken übereinander schieben; denn Letzteres würde eine im Hinblick auf die Optimierung des Druckverlustes nachteilige, doppelte Überdeckung der Siebfläche verursachen.

Diese Vorteile werden auch mit einer zweiten Ausführungsform der sichelförmig ausgebildeten Siebfelder 6 erzielt, bei denen die Außenkonturen der sichelförmigen Siebfelder 6 jeweils von zwei sich nicht schneidenden Abschnitten zweier Kreise mit identischem Radius und zwei die Kreisabschnitte verbindenden, geradlinigen oder bogenförmigen Verbindungsabschnitten gebildet sind. Durch die Verbindungsabschnitte sind derartige Siebfelder 6 im Vergleich zu der ersten Ausführungsform länger, haben also eine langgestreckte Sichelform, was den Vorteil mit sich bringt, dass die Anzahl der Siebfelder 6 in einem Endlossiebband 5 gegebener Länge geringer sein kann.

Die Siebfelder 6 sind mittels Verbindungselementen 11 derart verkettet, dass sie bei der Umlaufbewegung 7 in dem in dieser Ansicht rechts angeordneten Abschnitt in der Zeichenebene nach oben aus dem Flüssigkeitsstrom 2 herausgehoben, an einem oberen Umlenkpunkt 12 des Endlossiebbandes 5 innerhalb der Zeichenebene umgelenkt, dann im links angeordneten Abschnitt nach unten in den Flüssigkeitsstrom 2 eingetaucht und schließlich an einem unteren Umlenkpunkt 13 des Endlossiebbandes 5, nach wie vor in ein und derselben Zeichenebene, wieder umgelenkt werden, um ein in sich geschlossenes Endlossiebband 5 zu bilden. Die Geometrie des Endlossiebbandes 5 ist für dessen Umlaufbewegung im einfachsten Fall so ausgebildet, dass die Siebfelder 6 in einer jeweils geradlinigen Bewegung in den Flüssigkeitsstrom 2 eintauchen und aus diesem herausgehoben werden, wobei sie an einem oberen Umlenkpunkt 12 und an einem unteren Umlenkpunkt 13 mit einer im Wesentlichen kreisförmigen Bewegung umgelenkt werden. Die gelenkige Verbindung zwischen den einzelnen Siebfeldern 6 mittels der Verbindungselemente 11 ist also derart gestaltet, dass die einzelnen Siebfelder 6 innerhalb der Wirkebene des Endlossiebbandes 5 gegeneinander verschwenkbar sind.

Die Siebfelder 6 werden dabei an den Umlenkpunkten 12, 13 so gegeneinander verschwenkt, dass die Schwenkachse senkrecht zur Zeichenebene liegt. Die Verbindungselemente 11 sind Teil einer Kette, die dem Antrieb des Endlossiebbandes 5 dient, und werden an einem oberen Kettenrad 14, das motorisch angetrieben ist, und an einem unteren Kettenrad 15 umgelenkt. Die Kettenräder 14, 15 haben in dem dargestellten Beispiel jeweils acht Zähne; in anderen Ausführungsformen kann auch eine größere oder kleinere Zahl von Zähnen vorgesehen sein, je nach dem Radius der Umlenkung und den Abmessungen der Siebfelder 6.

Allgemein kann es vorteilhaft sein, wenn der Antrieb des Endlossiebbandes 5 eine Antriebskette umfasst, die an einer oberen Umlenkung des Endlossiebbandes 5 über ein oberes Kettenrad 14 und an einer unteren Umlenkung über ein unteres Kettenrad 15 läuft, da ein Kettenantrieb eine bevorzugte Ausführungsform für einen Antrieb des Endlossiebbandes 5 darstellt. Vorteilhafterweise ist dabei das obere Kettenrad 14 mittels eines Antriebsmotors antreibbar.

Aus Stabilitätsgründen umfasst die Siebvorrichtung 1 eine Führungseinrichtung, in der wenigstens einige Siebfelder 6 seitlich geführt sind. In Figur 1 ist hierzu zwischen den nach oben und nach unten laufenden, geradlinigen Abschnitten des dargestellten Endlossiebbandes 5 ein feststehendes Mittelführungsteil 16 angeordnet, welches das Endlossiebband 5 nach innen begrenzt. Das Mittelführungsteil 16 kann aus Stabilitätsgründen im Bereich seines unteren Endes ortsfest verankert sein, sodass es dem Strömungsdruck des Flüssigkeitsstroms 2 nicht nachgibt. Das Mittelführungsteil 16 hat den Vorteil, dass zumindest ein Teil der Siebfelder 6 in ihm geführt werden kann, was die Stabilität der Gesamtvorrichtung vorteilhaft erhöht. In dem Mittelführungsteil 16 können Siebfelder 6 geführt sein. Die Führung kann beispielsweise gleitend oder mittels an den Siebfeldern 6 oder an ihren Verbindungselementen 11 angeordneten, inneren drehbaren Führungselementen, z.B. Führungsrollen oder Kugeln erfolgen.

Zumindest einige der Siebfelder 6 sollten in einer seitlich, vorzugsweise entlang der den Flüssigkeitsstrom 2 begrenzenden Außenwandung 17 angeordneten Führungseinrichtung geführt werden, sodass nicht zwischen dem Endlossiebband 5 und der Außenwandung 17 aufgrund des Strömungsdrucks des Flüssigkeitsstroms 2 eine Lücke entstehen kann, durch welche die Flüssigkeit ohne Reinigungseffekt hindurchtreten würde. Zweckmäßigerweise ist diese Führung in die Außenwandung selbst eingelassen. Die Führung kann beispielsweise gleitend oder mittels an den Siebfeldern 6 oder Verbindungselementen 11 angebrachten äußeren drehbaren Führungselementen wie Führungsrollen oder Kugeln erfolgen.

In Figur 1 wird die Begrenzung des Flüssigkeitsstroms 2 nach außen durch die Außenwandung 17 gebildet. Diese Außenwandung 17 umfasst randständig nutförmige Führungen 18. Die Siebfelder 6 sind mit äußeren Führungsrollen 19 im Bereich der Außenwandung 17 bzw. Führung 18 und mit inneren Führungsrollen 20 im Bereich des Mittelführungsteils 16 seitlich geführt. Die Führungen 18 erweitern sich im unteren Umlenkbereich des Endlossiebbandes 5 zu Strömungsblenden, um ein Umströmen der Siebfelder 6 zu verhindern. Nach oben sind das Endlossiebband 1 sowie die zugehörigen Antriebs- und Abreinigungsaggregate mit einer Abdeckung 21 versehen.

Wie anhand der Figur 1 gut erkennbar ist, tauchen die Siebfelder 6 in die Führung 18 und in das Mittelführungsteil 16 so weit ein, dass die randseitigen Lücken, die aufgrund der Sichelform der Siebfelder 6 im Endlossiebband 5 vorhanden sind, von der Führung 18 und dem Mittelführungsteil 16 überdeckt sind. Die aus der Summe der Siebfelder 6 resultierende gemeinsame Siebfläche des Endlossiebbandes 5 überdeckt im Ergebnis den freien Querschnitt des Flüssigkeitsstroms 2 im Wesentlichen vollständig.

Ein anderes vorteilhaftes Merkmal kann darin bestehen, dass aus Stabilitätsgründen Siebband-Abstützelemente vorgesehen sind, die auf der Reinwasserseite des Endlossiebbandes 5, vorzugsweise im Bereich der Mittelachse von Siebfeldern 6, angeordnet sind. Sie können dazu dienen, die auf den Siebfeldern 6 lastende, von der Strömung verursachte Kraft aufzunehmen und die Siebfelder 6 abzustützen. Dabei können vorteilhafterweise auch Querverstrebungen zwischen den Abstützelementen oder zu den Wandungen oder der Sohle des Gerinnes 3 vorgesehen sein, um eine sichere Abstützung des Endlossiebbandes 5 zu gewährleisten. Die Siebband-Abstützelemente und die Querverstrebungen sind somit vorzugsweise ortsfest verankert, um die Stabilität der Siebvorrichtung 1 zu erhöhen.

Die Siebfelder 6 können gleitend auf den Siebband-Abstützelementen abgestützt sein. In einer bevorzugten Ausführungsform können drehbare Stützelemente, z.B. Stützrollen oder Kugeln zum Abstützen des Endlossiebbandes bzw. der Siebfelder auf einem Siebband-Abstützelement vorgesehen sein, die durch das Abrollen eine reibungsfreiere Umlaufbewegung des Endlossiebbandes 5 ermöglichen. Die drehbaren Stützelemente können beispielsweise an den Siebfeldern 6 oder an Verbindungselementen zwischen den Siebfeldern 6 angebracht sein.

Die erfindungsgemäße Siebvorrichtung 1 unterscheidet sich von der gattungsgemäßen Siebvorrichtung dadurch, dass sie Siebfelder 6 umfasst, deren Siebfläche 9 eine Vielzahl nebeneinander über die Siebfläche 9 verlaufender Vertiefungen und/oder Erhebungen aufweist. Die anderen Merkmale einer erfindungsgemäßen Siebvorrichtung 1 können gemäß der WO 01/08780 A1 ausgestaltet sein, auf deren Offenbarungsgehalt insoweit Bezug genommen wird. Diese anderen Merkmale können insbesondere die vorstehend anhand von Figur 1 erläuterten Merkmale oder die Kontur, die Verkettung, die Führung, die Abstützung, den Antrieb oder die Abreinigung der Siebfelder 6 betreffen.

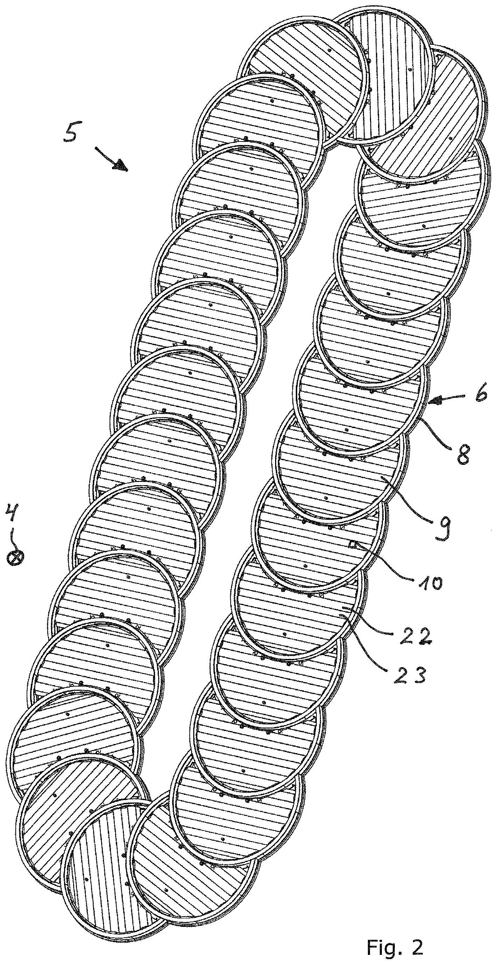

Die Figur 2 zeigt ein erstes Ausführungsbeispiel eines Endlossiebbandes 5 der Siebvorrichtung 1 von Figur 1, das aus aufeinanderfolgenden und untereinander verketteten Siebfeldern 6 gebildet ist. Dargestellt ist nur das Endlossiebband 5, ohne Führungen oder andere Teile der Siebvorrichtung 1. Im Unterschied zu Figur 1 weisen die Siebfelder 6 hier keine äußeren Führungen 19 oder inneren Führungen 20 auf, sondern sind mit Stützelementen, z.B. Stützrollen, auf einem nicht dargestellten Siebband-Abstützelement abgestützt. Die Siebvorrichtung 1 kann wahlweise mit äußeren Führungen 19, mit inneren Führungen 20, mit Stützelementen oder mit einer Kombination daraus ausgestattet sein.

Aus Gründen der Übersichtlichkeit ist nur bei einem der dargestellten Siebfelder 6 nur eine der vielen Siebflächenöffnungen 10 der Siebfläche 9 schematisch veranschaulicht, da die Siebflächenöffnungen 10 in dieser Skalierung nicht gut darstellbar sind und in anderen, Details zeigenden Figuren dargestellt werden. Die Siebfelder 6 weisen statt einer glatten bzw. ebenen Siebfläche 9 eine Siebfläche 9 mit einer Vielzahl von nebeneinander quer über die Siebfläche 9 verlaufenden Vertiefungen 22 und/oder Erhebungen 23 auf. Die Vertiefungen 22 können auch als Siebflächentäler und die Erhebungen 23 als Siebflächenkämme oder Siebflächenberge bezeichnet werden. Sie können auf der Anströmseite (der Schmutzwasserseite) oder auf der Abströmseite (der Reinwasserseite) der Siebfelder 6 oder auf beiden Seiten ausgebildet sein.

Die Orientierung der Vertiefungen 22 und/oder Erhebungen 23, d.h. die Richtung ihrer Längserstreckung, kann quer (d.h. horizontal), parallel (d.h. vertikal) oder schräg zur Bewegungsrichtung des Endlossiebbandes 5 sein, bezogen auf die Lage der Siebfelder 6 bei ihrer Aufwärtsbewegung in dem Endlossiebband 5 aus der Flüssigkeit in dem Gerinne 3. In Figur 2 ist diese Orientierung der Vertiefungen 22 und/oder Erhebungen 23 quer zur Bewegungsrichtung des Endlossiebbandes 5, d.h. sie verlaufen während der Aufwärtsbewegung der Siebfelder 6 horizontal.

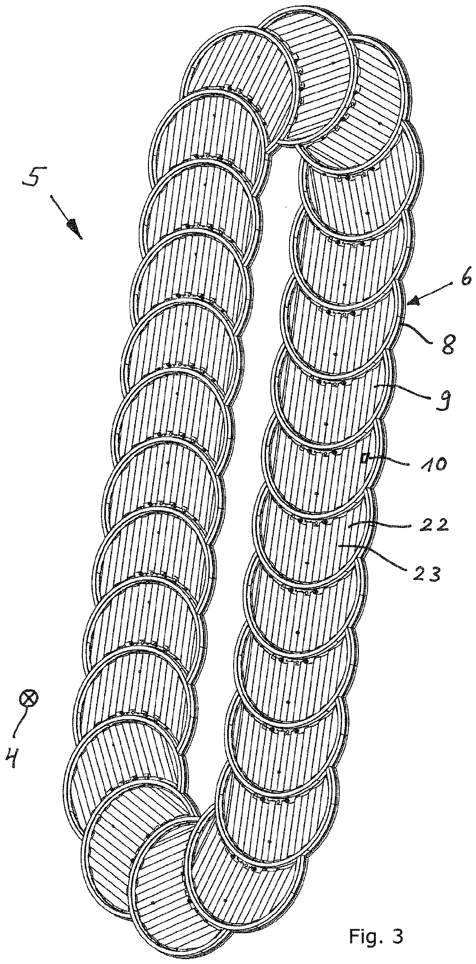

Die Figur 3 zeigt eine zweite Ausführungsform eines Endlossiebbandes 5 zu Figur 1, bei dem in Abwandlung zu Figur 2 die Orientierung der Vertiefungen 22 und/oder Erhebungen 23 parallel zur Bewegungsrichtung des Endlossiebbandes 5 ist, d.h. sie verlaufen während der Aufwärtsbewegung der Siebfelder 6 vertikal (bei senkrechter Anordnung des Endlossiebbandes 5) oder schräg (bei schräger Anordnung des Endlossiebbandes 5).

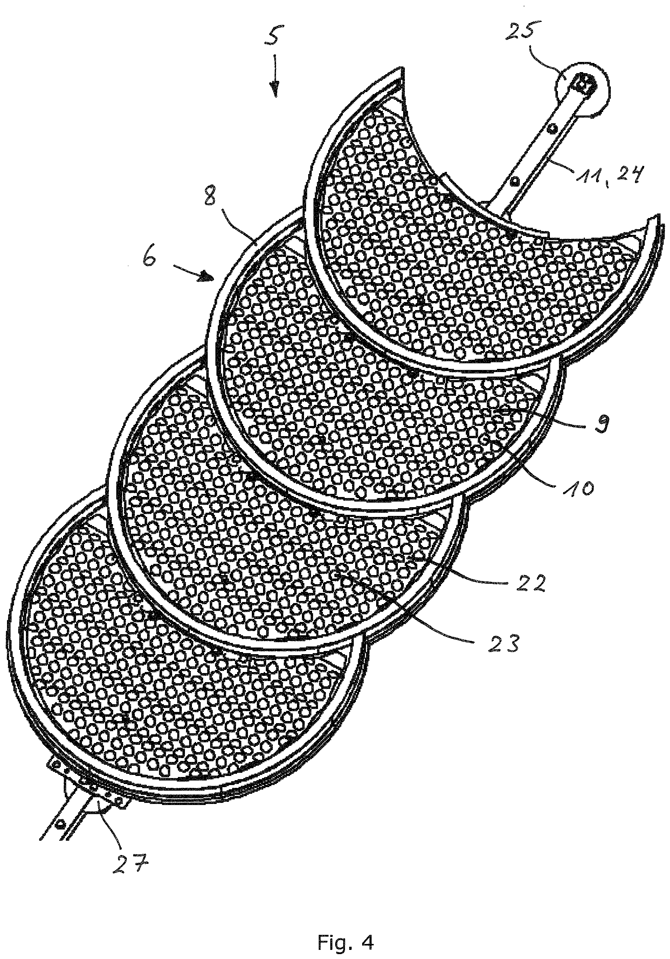

In Figur 4 ist eine Einzelheit des Endlossiebbandes 5 von Figur 2 aus einem geraden Bereich des Endlossiebbandes 5 dargestellt, und zwar aus einem Bereich, in dem sich die Siebfelder 6 in der Aufwärtsbewegung befinden, in der sie aus dem Flüssigkeitsstrom 2 mit daran anhaftendem Schmutz herausgehoben werden. Dargestellt sind die Siebfelder 6 mit den Siebfeldrahmen 8 und den Siebflächen 9. Eine vorteilhafte Ausführungsform eines Siebfeldes 6 besteht darin, dass es aus einem Siebfeldrahmen 8 und einer von diesem gehaltenen Siebfläche 9 gebildet ist. Die Siebflächen 9 weisen Siebflächenöffnungen 10 auf sowie eine Vielzahl nebeneinander über die Siebfläche 9 verlaufender Vertiefungen 22 und Erhebungen 23. Zu erkennen sind auch Kettenlaschen 24, die als Verbindungselemente 11 zum Verketten der Siebfelder 6 dienen, und Laufrollen 25 zum Führen der Siebfelder 6.

Ein weiteres vorteilhaftes Merkmal kann darin bestehen, dass die Siebfelder 6 an ihrem in Bewegungsrichtung hinteren Ende eine Schmutztasche, die beispielsweise durch eine Abkantung eines Profilrahmens oder eine Aussparung gebildet sein kann, aufweisen, um von dem Siebfeld 6 herabfallenden Schmutz oder Feststoffe mit aus der Flüssigkeit herauszufördern.

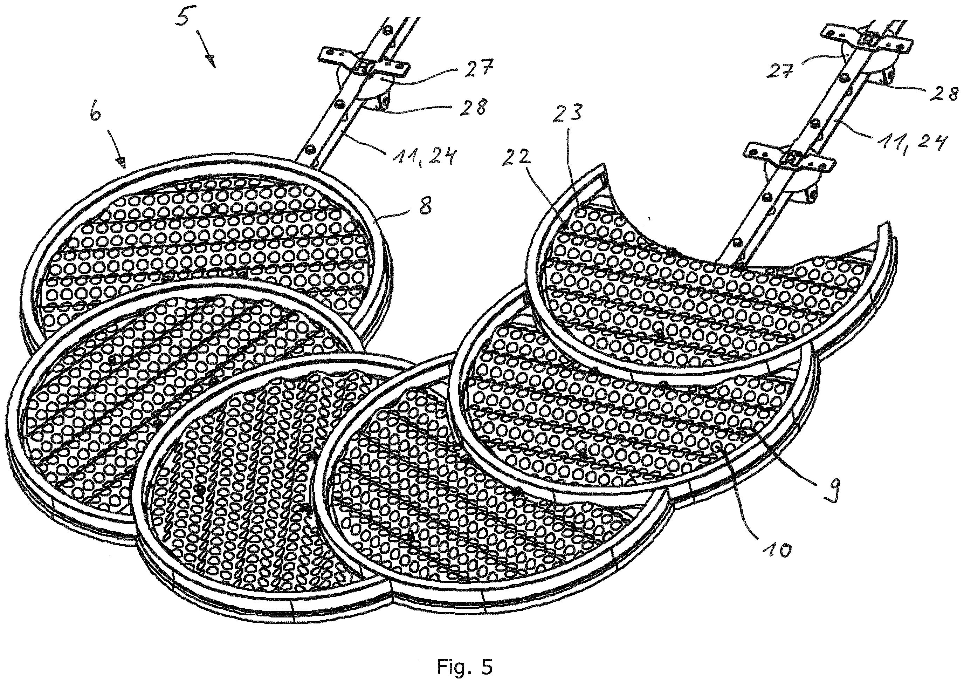

Die Figur 5 zeigt eine der Figur 4 entsprechende Einzelheit des Endlossiebbandes 5 von Figur 2 aus dem unteren Umlenkbereich des Endlossiebbandes 5. Man erkennt, wie die sichelförmigen Siebfelder 6 umgelenkt werden, ohne dass sich dabei zwischen benachbarten Siebfeldern 6 ein Spalt bildet, durch den Flüssigkeit ungesiebt hindurchtreten kann. Die über die Siebflächen 6 verlaufenden Vertiefungen 22 und Erhebungen 23 behalten bei der Umlenkung ihre relative Lage auf den bzw. gegenüber den Siebfeldern 6 bei, d.h. sie ändern entsprechend zu den Siebfeldern 6 ihre Orientierung.

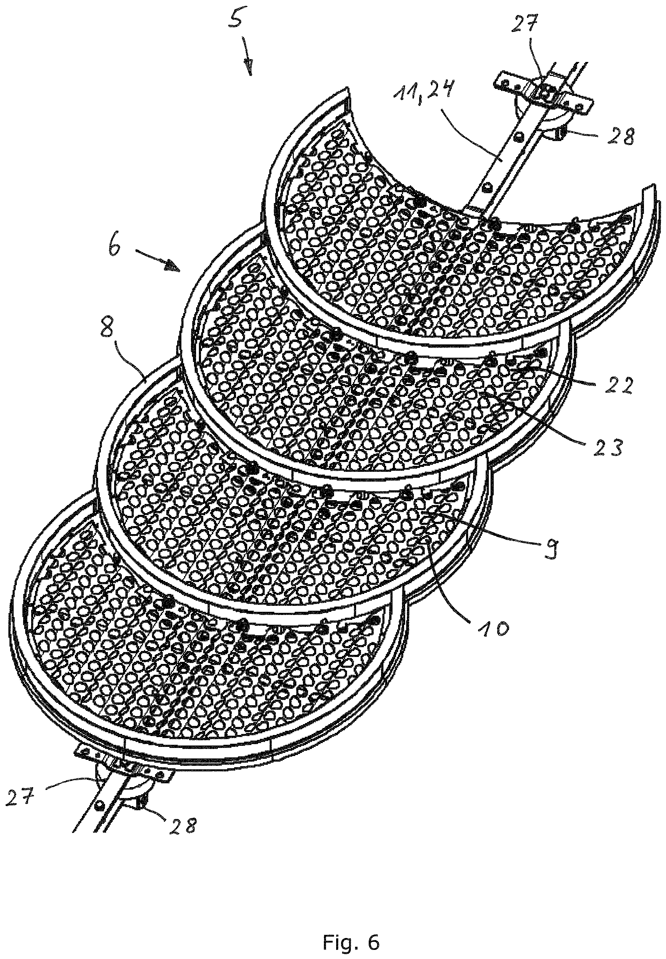

Die Figur 6 zeigt eine der Figur 4 entsprechende Einzelheit des Endlossiebbandes 5 von Figur 3 aus einem geraden Bereich des Endlossiebbandes 5, wobei in Abwandlung zu Figur 4 die Orientierung der Vertiefungen 22 und der Erhebungen 23 während der Aufwärtsbewegung der Siebfelder 6 parallel zur Bewegungsrichtung des Endlossiebbandes 5 ist.

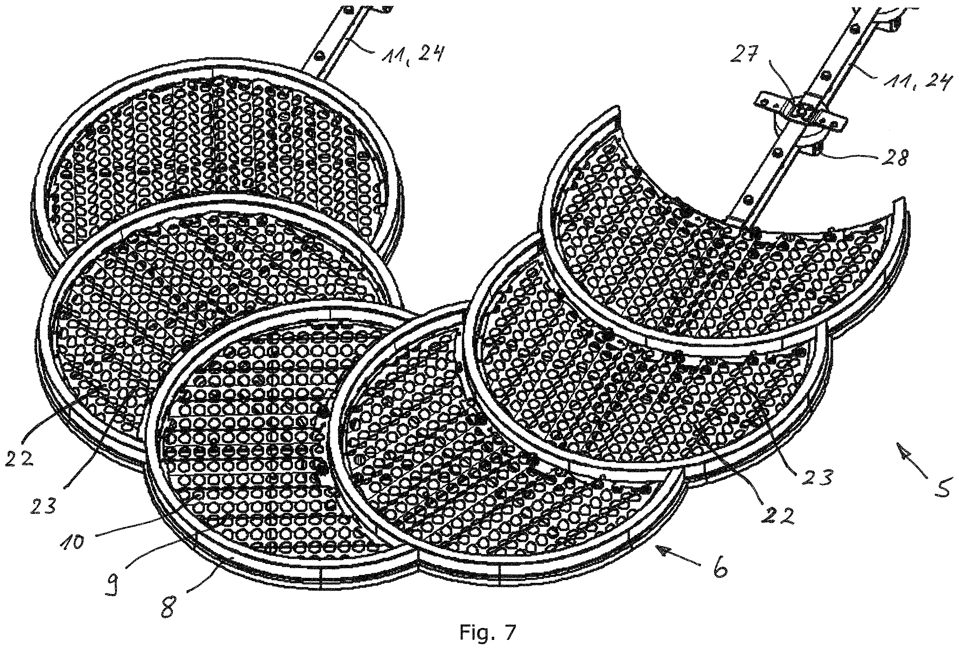

Die Figur 7 zeigt eine der Figur 5 entsprechende Einzelheit des Endlossiebbandes 5 von Figur 3 aus dem unteren Umlenkbereich des Endlossiebbandes 5, wobei in Abwandlung zu Figur 5 die Orientierung der Vertiefungen 22 und der Erhebungen 23 während der Aufwärtsbewegung der Siebfelder 6 parallel zur Bewegungsrichtung des Endlossiebbandes 5 ist.

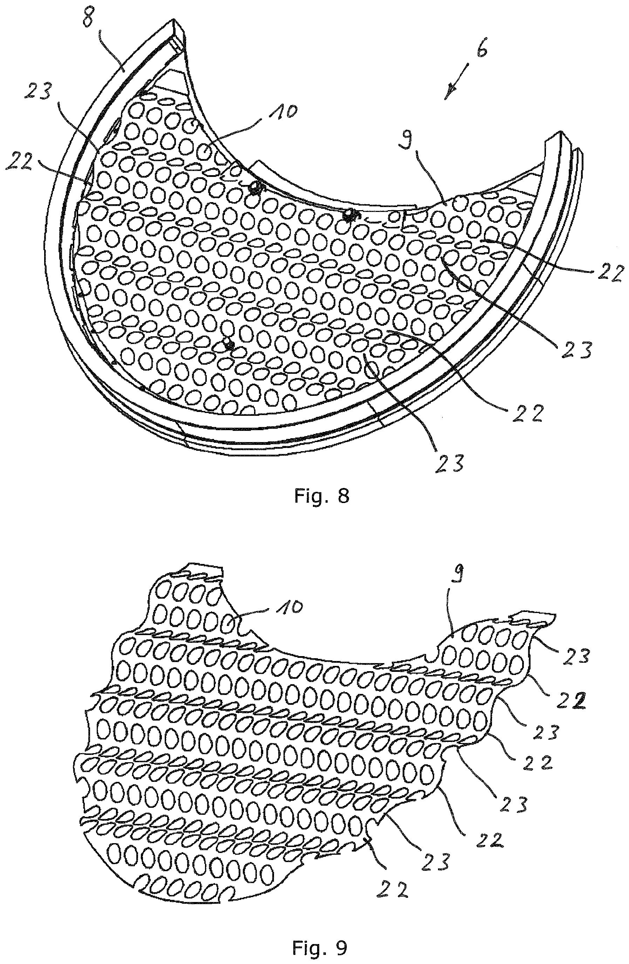

In Figur 8 ist ein Siebfeld 6 des Endlossiebbandes 5 von Figur 2 dargestellt, mit Siebfeldrahmen 8, Siebfläche 9, Siebflächenöffnungen 10 und nebeneinander über die Siebfläche 9 verlaufenden Vertiefungen 22 und Erhebungen 23. Nach einem allgemeinen und nicht nur in diesem dargestellten Ausführungsbeispiel vorteilhaften Merkmal wird vorgeschlagen, dass eine Siebfläche 9 sowohl eine Vielzahl nebeneinander über die Siebfläche 9 verlaufender Vertiefungen 22 als auch eine Vielzahl nebeneinander über die Siebfläche 9 verlaufender Erhebungen 23 aufweist, wobei die Vertiefungen 22 und Erhebungen 23 auf der Siebfläche 9 alternierend nebeneinander angeordnet sind, wie es in dem Ausführungsbeispiel von Figur 8 veranschaulicht ist. Durch eine alternierende Anordnung ergibt sich ein wellenartiges oder wellenähnliches Profil der Siebfläche 9, was Vorteile für die von der Siebfläche 9 aufgenommene Schmutzmenge, das Herausfördern des Schmutzes aus dem Gerinne 3 und die Stabilität der Siebfläche 9 und des Siebfeldes 6 hat.

Die Figur 9 zeigt die Siebfläche 9 des Siebfeldes 6 von Figur 8 ohne den Siebfeldrahmen 8. Nach einem anderen allgemeinen und nicht nur in diesem dargestellten Ausführungsbeispiel vorteilhaften Merkmal wird vorgeschlagen, dass die Anzahl der Vertiefungen 22 oder Erhebungen 23 auf jeweils einer Siebfläche 9 zwischen 3 und 50, bevorzugt zwischen 4 und 40 und besonders bevorzugt zwischen 5 und 30 beträgt. Dadurch wird ein in der praktischen Anwendung vorteilhaftes Profil der Siebfläche 9 erzielt. In Figur 9 hat die Siebfläche 9 vier Vertiefungen 22 (bzw. fünf, wenn man die beiden Enden jeweils zur Hälfte mitzählt) und fünf Erhebungen 23. Eine Ausbildung der Siebflächen 9 als Faltung mit einer Vielzahl von Vertiefungen 22 und Erhebungen 23 hat gegenüber einer einfachen, d.h. nicht wellenförmigen Wölbung der Siebfläche 9, egal ob diese einfache Wölbung (ein- oder zweidimensional) konkav, konvex oder in anderer Form, z.B. als Evolventensieb ausgebildet wäre, Vorteile für die von der Siebfläche 9 aufgenommene Schmutzmenge, das Herausfördern des Schmutzes aus dem Gerinne 3, die Stabilität der Siebfläche 9 und des Siebfeldes 6 sowie eine geringere Bauhöhe der Siebfläche 9 und des Siebfeldes 6 senkrecht zur Siebfläche 9.

Eine entsprechende, ebenfalls allgemein vorteilhafte Ausführung kann darin bestehen, dass die Anzahl der Vertiefungen 22 oder Erhebungen 23 auf jeweils einer Siebfläche 9 zwischen 2 und 20 pro Meter, bevorzugt zwischen 2,5 und 10 pro Meter und besonders bevorzugt zwischen 3 und 5 pro Meter beträgt, bezogen auf einen ebenen Querschnitt der Siebfläche 9 und gemessen in einer Richtung quer zur Längserstreckung der Vertiefungen 22 bzw. Erhebungen 23.

Nach einem entsprechenden Merkmal wird vorgeschlagen, dass der Abstand zwischen den Vertiefungen 22 und Erhebungen 23 auf jeweils einer Siebfläche 9 zwischen 5 cm und 50 cm, bevorzugt zwischen 10 cm und 40 cm und besonders bevorzugt zwischen 20 cm und 30 cm beträgt.

Die in dem Ausführungsbeispiel von Figur 9 dargestellten Vertiefungen 22 und Erhebungen 23 der Siebfläche 9 sind geradlinig, was eine allgemein bevorzugte Ausführungsform darstellt. Derartige Siebflächen 9 sind besonders einfach herstellbar, indem beispielsweise in eine ebene Siebfläche eine wellenartige Faltung eingebracht wird, also ohne die Siebfläche 9 mit einer flächigen Wölbung zu versehen.

In anderen Ausführungsformen kann aber auch vorgesehen sein, dass die Vertiefungen 22 und Erhebungen 23 einer Siebfläche 9 bogenförmig verlaufen, wobei sich die Vertiefungen 22 und Erhebungen 23 über eine flache Bezugsebene spannen. Dadurch entsteht eine kalottenförmige, sich über die Siebfläche 9 erhebende Wölbung der gefalteten Siebfläche 9, wobei die Wölbung aus statischen Gründen bevorzugt zur Anströmseite hin gerichtet ist. Bei einer solchen Ausbildung ist die effektive Fläche des Siebfeldes 6 noch weiter vergrößert.

Die Ausgestaltung des Materials, des Aufbaus, der Halterung und der Siebflächenöffnungen 10 der Siebflächen 9 kann an den jeweiligen Anwendungszweck angepasst werden. So können beispielsweise die Siebflächen 9 aus gelochtem oder geschlitztem Blech, aus Kunststoff oder aus Drahtgewebe gefertigt werden. Die Siebflächen 9 können weitgehend selbsttragend sein und/oder von einem Siebfeldrahmen 8 getragen werden und/oder eine an oder auf den Siebflächen 9 angebrachte Träger- bzw. Stützstruktur aufweisen. Eine solche Ausbildung kann z.B. darin bestehen, dass an oder auf einer Träger- bzw. Stützstruktur, z.B. einem festen Draht, die von einem Siebfeldrahmen 8 getragen wird, ein Maschenmaterial, z.B. ein Draht- oder Maschengewebe befestigt wird, aus Stabilitätsgründen vorzugsweise auf der Anströmseite der Träger- bzw. Stützstruktur. Für eine besonders harte Beanspruchung können die Siebflächen 9 ferner mit Versteifungselementen versehen werden.

Der Durchmesser bzw. die Größe oder lichte Weite der bevorzugt maschenförmigen Siebflächenöffnungen 10 (Durchströmungsöffnungen), durch welche die Flüssigkeit oder kleine, nicht aus dem Gerinne gesiebte Bestandteile durch die Siebflächen 9 abfließen können, ist dem jeweiligen Anwendungsbereich angepasst. Vorteilhafte Werte hierfür liegen im Bereich von 5 mm bis 10 cm. Die Maschenweite der Siebfelder bzw. der Siebelemente liegt vorzugsweise zwischen 0,1 mm und 10 mm, insbesondere zwischen 2 mm und 4 mm. Im typischen Einsatzgebiet solcher Siebfelder bietet die erfindungsgemäße Siebvorrichtung 1 die signifikantesten Vorteile gegenüber dem Stand der Technik.

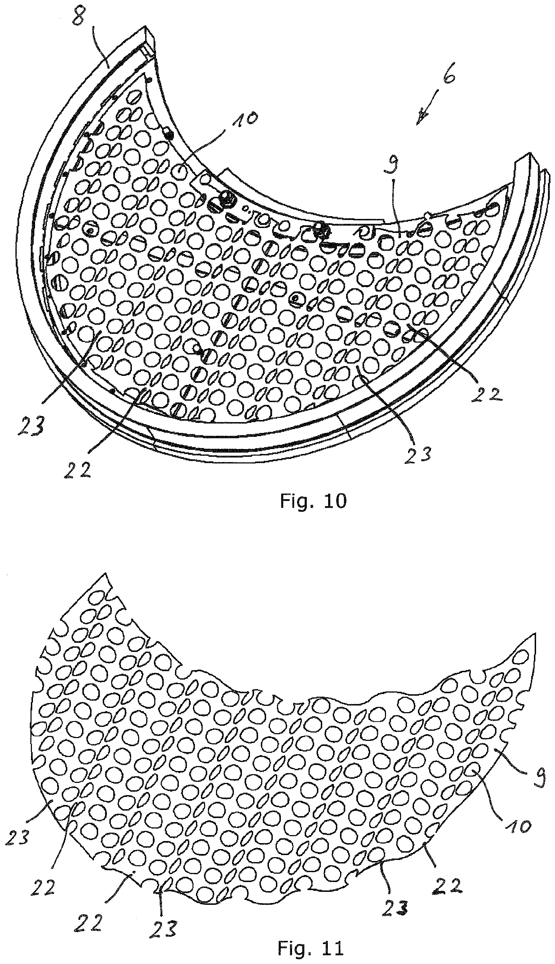

Die Figur 10 entspricht der Figur 8 und zeigt ein gegenüber der Figur 8 abgewandeltes Siebfeld 6 für das Endlossiebband 5 von Figur 3. Die Figur 11 zeigt die Siebfläche 9 des Siebfeldes 6 von Figur 10 ohne den Siebfeldrahmen 8.

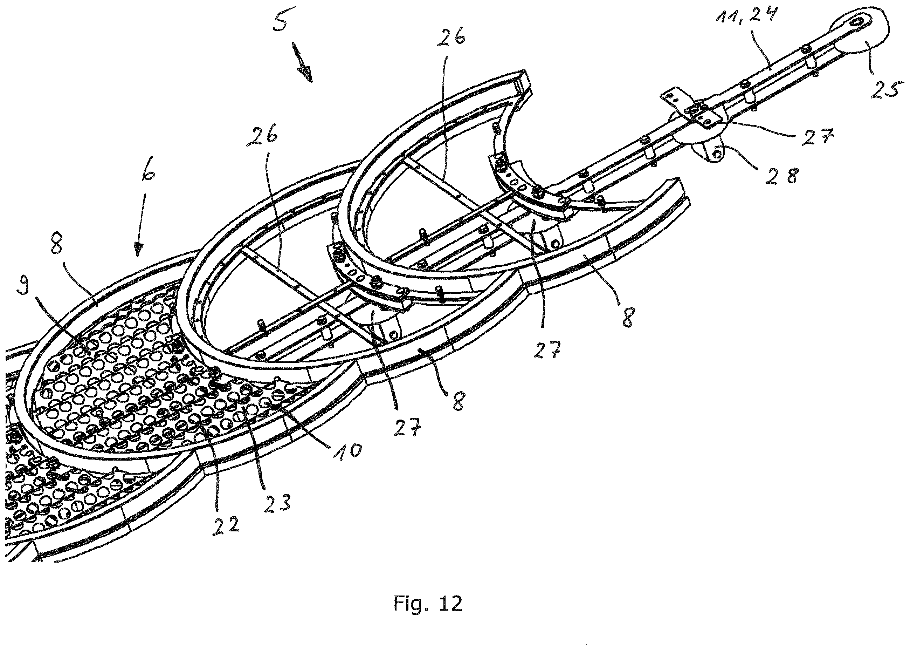

Die Figur 12 zeigt eine Einzelheit zu Figur 6, wobei manche Siebfeldrahmen 8 ohne darin eingesetzte Siebflächen 9 dargestellt sind, sodass man den darunter liegenden Aufbau der Verkettung und Abstützung erkennen kann. Zu erkennen sind hier nicht nur die sichelförmige Ausbildung der die Siebflächen 9 tragenden Siebfeldrahmen 8 und die Kettenlaschen 24 und Laufrollen 25, die zum Verketten bzw. Führen der Siebfelder 6 dienen, sondern auch Siebfeldquerverstrebungen 26 in den Siebfeldrahmen 8, die zum Verstärken der Siebfeldrahmen 8 und/oder als Träger- bzw. Stützstruktur für die Siebflächen 9 dienen und vorzugsweise auf der Reinwasserseite der Siebflächen 9 angeordnet sind. Ferner sieht man hier in Kettengelenken 27 angeordnete Stützrollen 28, die als drehbare Stützelemente zum Abstützen des Endlossiebbandes 5 bzw. der Siebfelder 6 auf einem nicht dargestellten Siebband-Abstützelement dienen.

Die Figur 12 veranschaulicht die gelenkige Verbindung der Siebfelder 6. In einer bevorzugten Ausführungsform sind die Siebfelder 6 mittels Verbindungselementen, z.B. Verbindungsstangen oder Kettenlaschen 24, untereinander verkettet. Dies hat Vorteile hinsichtlich der Übertragung der Kraft zum Bewegen des Endlossiebbandes 5 in seiner Umlaufbewegung 7 und der Führung der Siebfelder 6. Besonders bevorzugt ist dabei, wenn die Verbindungselemente Teile einer Antriebskette für das Endlossiebband 5, insbesondere Laschen einer Antriebskette bilden. Dies ermöglicht eine vorteilhafte Konstruktion unter Verwendung einer geringen Anzahl erforderlicher Bauteile. In dem Ausführungsbeispiel von Figur 12 sind die sichelförmigen Siebfelder 6 über Kettenlaschen 24 untereinander verkettet, wobei vorzugsweise die Kettenlaschen 24 in ihrer Gesamtheit eine Antriebskette für das Endlossiebband 5 bilden.

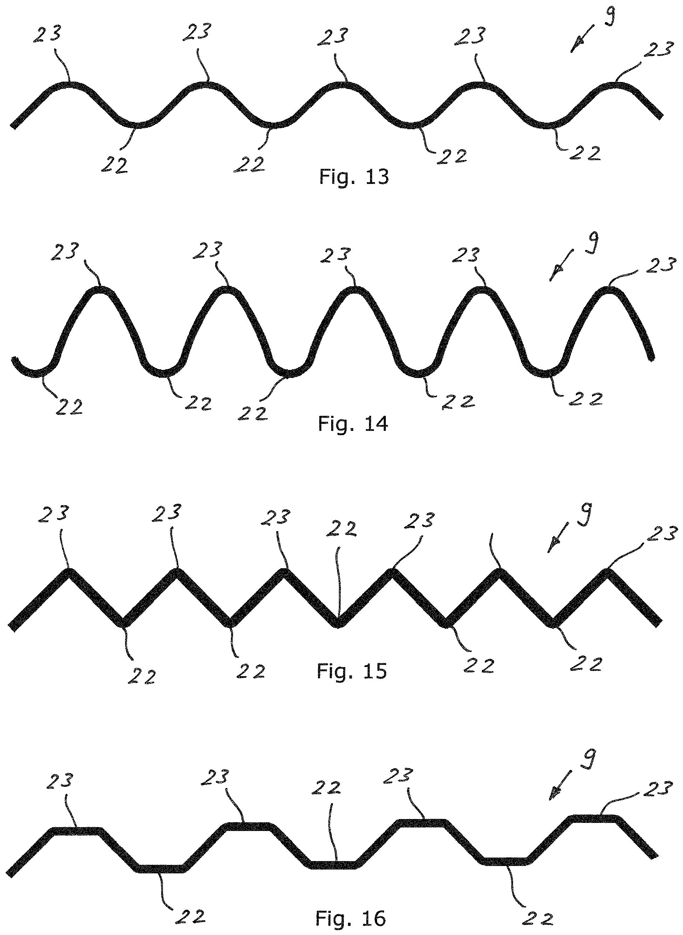

Die Ausgestaltung der Form der Vertiefungen 22 und/oder Erhebungen 23 der Siebflächen 9 kann an den jeweiligen Anwendungszweck der Siebvorrichtung 1 angepasst werden. Vorteilhafte Ausführungsformen können darin bestehen, dass der Querschnitt der Vertiefungen 22 und Erhebungen 23 auf den Siebflächen wellenförmig, wellenartig, sägezahnförmig oder trapezförmig gefaltet ausgebildet ist. Die Figuren 13 bis 16 zeigen Querschnittsprofile beispielhafter Ausführungsformen.

In Figur 13 ist das Profil der Siebfläche 9 wellenförmig gefaltet, d.h. es entspricht im Wesentlichen einer natürlichen Wellen- oder Sinusform.

In Figur 14 ist das Profil der Siebfläche 9 wellenartig gefaltet, d.h. es entspricht näherungsweise einer natürlichen Wellen- oder Sinusform. Die Figur 14 zeigt eine evolventenartig gefaltete Siebfläche 9.

In Figur 15 ist das Profil der Siebfläche 9 sägezahnförmig gefaltet, d.h. die Faltung erfolgt v-förmig, dachförmig, zickzackförmg oder dreiecksförmig. In Figur 15 ist der Steigungswinkel beider Flanken einer Vertiefung 22 bzw. Erhebung 23 gleich, sie kann aber auch verschieden sein.

In Figur 16 ist das Profil der Siebfläche 9 trapezförmig gefaltet, d.h. die Siebfläche 9 ist stufenförmig gefaltet, wobei sich obere und untere Abschnitte, die parallel zueinander und nicht geneigt sind, mit schrägen, d.h. nicht senkrecht dazu orientierten Flanken abwechseln.

Allen Ausführungsformen ist gemeinsam, dass die Siebfläche 9 nicht glatt bzw. eben, sondern mit wellenartig aufeinanderfolgenden Vertiefungen 22 und Erhebungen 23 gefaltet ist. Diese Ausführungsformen haben den Vorteil, dass sie keine spitzwinkligen Bereiche in der Siebfläche 9 aufweisen, in denen eventuell Schmutzstoffe verstärkt anhaften können.

Nach einem vorteilhaften Merkmal wird für das Profil der Siebfläche 9 vorgeschlagen, dass das Verhältnis der Höhe der Vertiefungen 22 und Erhebungen 23, bezogen auf einen ebenen Querschnitt der Siebfläche 9, auf jeweils einer Siebfläche 9 zu dem Abstand zwischen den Vertiefungen 22 und Erhebungen 23 auf der Siebfläche 9 zwischen 0,1 und 2, bevorzugt zwischen 0,2 und 1,5 und besonders bevorzugt zwischen 0,3 und 1,0 beträgt. Dies bedeutet, dass die gefaltete Siebfläche 9 relativ "flach" ist, also die Faltung keine zu große "Amplitude" hat. Derartige Siebflächen 9 nehmen viel Schmutz auf, ohne dass er sich in ihnen dauerhaft verfängt, können gut abgereinigt werden und sind stabil.

Nach einem anderen vorteilhaften Merkmal wird vorgeschlagen, dass der über die Siebfläche 9 eines Siebfeldes 6 gemittelte Betrag des über die quer zur Längserstreckung der Vertiefungen 22 und Erhebungen 23 gemessenen Flankenwinkels der Vertiefungen 22 und Erhebungen 23 der Siebfläche 9, bezogen auf einen ebenen Querschnitt der Siebfläche und ohne Berücksichtigung der nicht geneigt zu einem ebenen Querschnitt der Siebfläche 9 verlaufenden Abschnitte der Siebfläche 9, zwischen 10° und 80°, bevorzugt zwischen 20° und 70° und besonders bevorzugt zwischen 30° und 60° beträgt.

Der nach diesem Merkmal über die Längserstreckung (d.h. in Richtung der Faltung bzw. quer zur Richtung der Falze) gemittelte Flankenwinkel (Steigung/Schräge) der Vertiefungen 22 und Erhebungen 23 der Siebfläche 9 ergibt sich für eine Sinuswelle mit der Periodenlänge T und der Amplitude A zu arctan(4A/T). Für das Ausführungsbeispiel von Figur 13 mit T=3,3 und A=0,5 ergibt sich ein Wert von arctan(2/3,3)=31,2°. Bei dem Ausführungsbeispiel von Figur 14 ist dieser Wert etwas höher, weil das Profil stärker gefaltet ist. In den Ausführungsbeispielen von Figur 15 und Figur 16 beträgt dieser Wert 45°, nämlich die Flankensteilheit der dargestellten Sägezahnform, die aber auch größer oder kleiner sein kann.

Dieses bevorzugte Merkmal besagt anders ausgedrückt, dass die Faltung nicht rechteckig, d.h. nicht stufen- oder treppenförmig sein soll, d.h. der Flankenwinkel der Vertiefungen 22 und Erhebungen 23 nicht 90° betragen soll. Eine rechteckförmige Ausbildung hätte zwar bei sehr dichter Faltung den Vorteil einer maximalen effektiven Siebfläche 9 für ein Siebfeld 6 gegebener Abmessungen, hat aber den Nachteil, dass die senkrechten Flanken nicht gut von der Flüssigkeit durchströmt werden, sodass der Strömungswiderstand hoch ist. Ferner ist mit einer solchen Bauform mit rechteckigem Profil, im Gegensatz zu wellenartigen Ausbildungen, keine Flächenvergrößerung der effektiven Siebfläche um 30 % bis 40 % bei einer geringen Bauhöhe erzielbar, da aus Fertigungs- und Stabilitätsgründen die Faltung nicht zu stark ausgeprägt sein sollte.

### Bezugszeichenliste

- 1: Siebvorrichtung
- 2: Flüssigkeitsstrom
- 3: Gerinne
- 4: Fließrichtung
- 5: Endlossiebband
- 6: Siebfeld
- 7: Umlaufbewegung
- 8: Siebfeldrahmen
- 9: Siebfläche
- 10: Siebflächenöffnung
- 11: Verbindungselement
- 12: oberer Umlenkpunkt
- 13: unterer Umlenkpunkt
- 14: oberes Kettenrad
- 15: unteres Kettenrad
- 16: Mittelführungsteil
- 17: Außenwandung
- 18: Führung
- 19: äußere Führungsrolle
- 20: innere Führungsrolle
- 21: Abdeckung
- 22: Vertiefung
- 23: Erhebung
- 24: Kettenlasche
- 25: Laufrolle
- 26: Siebfeldquerverstrebung
- 27: Kettengelenk
- 28: Stützrolle

## Patentansprüche

1. Siebvorrichtung (1) zum mechanischen Abscheiden und Herausfördern von festen Bestandteilen, Festkörpern oder Feststoffen aus dem Flüssigkeitsstrom (2) einer in einem Gerinne (3) fließenden Flüssigkeit, insbesondere Sieb- oder Filterrechen für Prozess-, Kühl- oder Abwasserströmungen oder in Klär- oder Wasserkraftanlagen,
mit einer Anzahl von im Wesentlichen quer zur Fließrichtung (4) des Flüssigkeitsstroms (2) ausgerichteten Siebfeldern (6), die jeweils eine Siebfläche (9) mit einer Vielzahl von Siebflächenöffnungen (10) aufweisen,
wobei die Siebfelder (6) ein umlaufendes, teilweise in den Flüssigkeitsstrom (2) eintauchbares Endlossiebband (5) bilden, in dem mehrere in Bewegungsrichtung des Endlossiebbandes (5) aufeinanderfolgende, nebeneinander angeordnete Siebfelder (6) eine gemeinsame Siebfläche in dem Gerinne (3) bilden,
sowie mit einem Antrieb zum Antreiben des Endlossiebbandes (5) in einer Umlaufbewegung (7),
wobei die Siebfelder (6) in dem Endlossiebband (5) derart aufeinanderfolgend angeordnet sind, dass die Umlaufbewegung (7) des Endlossiebbandes (5) insgesamt innerhalb einer einzigen Ebene gehalten ist, und wobei die Schwenkachsen, um die die Siebfelder (6) an Umlenkpunkten (12,13) des Endlossiebbandes (5) verschwenkt werden, senkrecht zur gemeinsamen Siebfläche liegen, **dadurch gekennzeichnet, dass**
sie Siebfelder (6) umfasst, deren Siebfläche (9) eine Vielzahl nebeneinander über die Siebfläche (9) verlaufender Vertiefungen (22) und/oder Erhebungen (23) aufweist, und
sie Siebfelder (6) umfasst, die auf ihrer Anströmseite jeweils eine Fischheberinne aufweisen, wobei die Fischheberinne derart angeordnet und ausgebildet ist, dass sie sich bei den aufwärts bewegenden Siebfeldern (6) am unteren Ende befindet, sie bei den sich aufwärts bewegenden Siebfeldern (6) jeweils eine mit Flüssigkeit gefüllte Auffangvertiefung für in dem jeweiligen Siebfeld (6) befindliche Wassertiere bildet, die bei der Bewegung des Endlossiebbandes (5) mit dem Siebfeld (6), mit der in der Auffangvertiefung enthaltenen Flüssigkeit und mit in der Flüssigkeit aufgefangenen Wassertieren in der Bewegungsrichtung des Endlossiebbandes (5) aus dem Flüssigkeitsstrom (2) herausgehoben wird, und im oberen Umlenkbereich des Endlossiebbandes (5) in einem Entleerungsbereich der Siebvorrichtung (1) durch eine Verkippung des Siebfeldes (6) und der Auffangvertiefung in eine Auffangsammelrinne ausgeleert wird, wobei die Siebvorrichtung (1) einen Reinigungsbereich mit einer Sprüheinrichtung zum Abreinigen des Schmutzes von den Siebflächen (9) aufweist, der in der Bewegungsrichtung des Endlossiebbandes (5) so weit hinter dem Entleerungsbereich angeordnet ist, dass die Auffangvertiefungen entleert werden, bevor sie den Reinigungsbereich erreichen.

2. Siebvorrichtung (1) nach Anspruch 1, **dadurch gekennzeichnet, dass** sie Siebfelder (6) umfasst, deren Siebfläche (9) eine Vielzahl nebeneinander über die Siebfläche (9) verlaufender Vertiefungen (22) und Erhebungen (23) aufweist, wobei die Vertiefungen (22) und Erhebungen (23) auf der Siebfläche (9) alternierend nebeneinander angeordnet sind.

3. Siebvorrichtung (1) nach einem der vorhergehenden Ansprüche, **dadurch gekennzeichnet, dass** der Querschnitt der Vertiefungen (22) und Erhebungen (23) auf den Siebflächen (9) wellenförmig, wellenartig, sägezahnförmig oder trapezförmig gefaltet ausgebildet ist.

4. Siebvorrichtung (1) nach einem der vorhergehenden Ansprüche, **dadurch gekennzeichnet, dass** die Anzahl der Vertiefungen (22) oder Erhebungen (23) auf jeweils einer Siebfläche (9) zwischen 3 und 50, bevorzugt zwischen 4 und 40 und besonders bevorzugt zwischen 5 und 30 beträgt.

5. Siebvorrichtung (1) nach einem der vorhergehenden Ansprüche, **dadurch gekennzeichnet, dass** die Anzahl der Vertiefungen (22) oder Erhebungen (23) auf jeweils einer Siebfläche (9) zwischen 2 und 20 pro Meter, bevorzugt zwischen 2,5 und 10 pro Meter und besonders bevorzugt zwischen 3 und 5 pro Meter beträgt, bezogen auf einen ebenen Querschnitt der Siebfläche (9) und gemessen in einer Richtung quer zur Längserstreckung der Vertiefungen (22) bzw. Erhebungen (23).

6. Siebvorrichtung (1) nach einem der vorhergehenden Ansprüche, **dadurch gekennzeichnet, dass** der Abstand zwischen den Vertiefungen (22) und Erhebungen (23) auf jeweils einer Siebfläche (9) zwischen 5 cm und 50 cm, bevorzugt zwischen 10 cm und 40 cm und besonders bevorzugt zwischen 20 cm und 30 cm beträgt.

7. Siebvorrichtung (1) nach einem der vorhergehenden Ansprüche, **dadurch gekennzeichnet, dass** die Höhe der Vertiefungen (22) und Erhebungen (23) auf jeweils einer Siebfläche (9) zwischen 2 cm und 20 cm, bevorzugt zwischen 4 cm und 15 cm und besonders bevorzugt zwischen 6 cm und 10 cm beträgt, bezogen auf einen ebenen Querschnitt der Siebfläche (9).

8. Siebvorrichtung (1) nach einem der vorhergehenden Ansprüche, **dadurch gekennzeichnet, dass** das Verhältnis der Höhe der Vertiefungen (22) und Erhebungen (23), bezogen auf einen ebenen Querschnitt der Siebfläche (9), auf jeweils einer Siebfläche (9) zu dem Abstand zwischen den Vertiefungen (22) und Erhebungen (23) auf der Siebfläche (9) zwischen 0,1 und 2, bevorzugt zwischen 0,2 und 1,5 und besonders bevorzugt zwischen 0,3 und 1,0 beträgt.

9. Siebvorrichtung (1) nach einem der vorhergehenden Ansprüche, **dadurch gekennzeichnet, dass** der über die Siebfläche (9) eines Siebfeldes (6) gemittelte Betrag des über die quer zur Längserstreckung der Vertiefungen (22) und Erhebungen (23) gemessenen Flankenwinkels der Vertiefungen (22) und Erhebungen (23) der Siebfläche (9), bezogen auf einen ebenen Querschnitt der Siebfläche (9) und ohne Berücksichtigung der nicht geneigt zu einem ebenen Querschnitt der Siebfläche (9) verlaufenden Abschnitte der Siebfläche (9), zwischen 10° und 80°, bevorzugt zwischen 20° und 70° und besonders bevorzugt zwischen 30° und 60° beträgt.

10. Siebvorrichtung (1) nach einem der vorhergehenden Ansprüche, **dadurch gekennzeichnet, dass** die Vertiefungen (22) und Erhebungen (23) einer Siebfläche (9) geradlinig sind.

11. Siebvorrichtung (1) nach einem der vorhergehenden Ansprüche, **dadurch gekennzeichnet, dass** die Vertiefungen (22) und Erhebungen (23) einer Siebfläche (9) bogenförmig verlaufen.

12. Siebvorrichtung (1) nach einem der vorhergehenden Ansprüche, **dadurch gekennzeichnet, dass** die Ebene der Umlaufbewegung (7) der Siebfelder (6) im wesentlichen senkrecht zur Fließrichtung (4) des Flüssigkeitsstroms (2) angeordnet ist.

13. Siebvorrichtung (1) nach einem der vorhergehenden Ansprüche, **dadurch gekennzeichnet, dass** der sich aufwärts bewegende Teil des umlaufenden Endlossiebbandes (5) und der sich abwärts bewegende Teil des umlaufenden Endlossiebbandes (5) jeweils etwa eine rechte bzw. linke Hälfte des Flüssigkeitsstroms (2) abdecken.

14. Siebvorrichtung (1) nach einem der vorhergehenden Ansprüche, **dadurch gekennzeichnet, dass** in dem Reinigungsbereich an den Siebflächen (9) anhaftender und aus dem Flüssigkeitsstrom (2) heraus geförderter Schmutz durch Absprühen der aus dem Flüssigkeitsstrom (2) herausgehobenen Siebfelder (6) des Endlossiebbandes (5) mittels Wasser- oder Druckluft-Sprühdüsen von den Siebfeldern (6) abgesprüht und von einer auf der den Sprühdüsen gegenüberliegenden Seite des Endlossiebbandes (5) angeordneten Schmutzauffangrinne aufgenommen wird, und dass durch die schrägen Flanken der Erhebungen (23) und/oder Vertiefungen (22) in den Siebflächen (9) der abgesprühte Schmutz in Richtung zu der Schmutzauffangrinne geleitet wird.

15. Verwendung einer Siebvorrichtung (1) nach einem der vorhergehenden Ansprüche zum mechanischen Abscheiden und Herausfördern von festen Bestandteilen, Festkörpern oder Feststoffen aus dem Flüssigkeitsstrom (2) einer in einem Gerinne (3) fließenden Flüssigkeit, insbesondere als Sieb- oder Filterrechen für eine Prozess-, Kühl- oder Abwasserströmung oder in einer Klär- oder Wasserkraftanlage.

## Claims

1. Screening device (1) for mechanically separating and extracting solid elements, solid bodies or solid matter from the stream of liquid (2) of a liquid flowing in a sluice channel (3), in particular, a screen or filter grating for process, cooling water or effluent currents or for use in sewage treatment plants or hydroelectric power stations,
with a number of screening panels (6), which are substantially oriented transversely to the flow direction (4) of the stream of liquid (2), and which each have a screening surface (9) with a plurality of screening surface openings (10),
wherein the screening panels (6) form a circulating, continuous screening belt (5), which can be partially immersed in the stream of liquid (2) and in which a number of successive screening panels (6) arranged adjacent to one another in the direction of motion of the continuous screening belt (5) form a common screening surface in the sluice channel (3),
and with a drive for driving the continuous screening belt (5) in a circulatory motion (7),
wherein the screening panels (6) are arranged successively in the continuous screening belt (5) in such a way that the circulatory motion (7) of the continuous screening belt (5) is kept completely within a single plane, and wherein the pivot axes, about which the screening panels (6) are pivoted at return points (12, 13) of the continuous screening belt (5), lie perpendicular to the common screening surface,
**characterized in that**
it comprises screening panels (6), the screening surface (9) of which has a plurality of recesses (22) and/or elevations (23) running adjacent to one another across the screening surface (9) and
that it comprises screening panels (6) that each have, on the inflow side thereof, a fish-lifting trough, wherein the fish-lifting trough is arranged and designed such that, with respect to the screening panels (6) moving upwards it is located at the lower end, with respect to the screening panels (6) moving upwards it forms in each case a liquid-filled collection recess for aquatic animals located in the particular screening panel (6), which collecting recess is lifted, in the movement direction of the continuous screening belt (5), out of the stream of liquid (2) together with the screening panel (6), together with the liquid contained in the collecting recess and together with aquatic animals caught in the liquid, when the continuous screening belt (5) moves, and is emptied out into a collecting channel in the upper return area of the continuous screening belt (5), in an emptying area of the screening device (1), by tipping the screening panel (6) and the collecting recess, wherein the screening device (1) comprises a cleaning area with a spray device for cleaning the debris from the screening surfaces (9), the cleaning area being arranged so far behind the emptying area in the direction of motion of the continuous screening belt (5) that the collecting recesses are emptied before they reach the cleaning area.

2. Screening device (1) according to claim 1, **characterized in that** it comprises screening panels (6), the screening surface (9) of which has a plurality of recesses (22) and elevations (23) running adjacent to one another across the screening surface (9), wherein the recesses (22) and elevations (23) are arranged alternating with one another on the screening surface (9).

3. Screening device (1) according to any one of the preceding claims, **characterized in that** the cross-section of the recesses (22) and elevations (23) on the screening surfaces (9) is configured to be folded in a wavelike, wavy, sawtooth-shaped or trapezoidal manner.

4. Screening device (1) according to any one of the preceding claims, **characterized in that** the number of recesses (22) or elevations (23) on each screening surface (9) is between 3 and 50, preferably between 4 and 40 and particularly preferably between 5 and 30.

5. Screening device (1) according to any one of the preceding claims, **characterized in that** the number of recesses (22) or elevations (23) on each screening surface (9) is between 2 and 20 per meter, preferably between 2.5 and 10 per meter and particularly preferably between 3 and 5 per meter, related to a level cross-section of the screening surface (9) and measured in a direction transverse to the longitudinal extension of the recesses (22) or elevations (23).

6. Screening device (1) according to any one of the preceding claims, **characterized in that** the distance between the recesses (22) and elevations (23) on each screening surface (9) is between 5 cm and 50 cm, preferably between 10 cm and 40 cm and particularly preferably between 20 cm and 30 cm.

7. Screening device (1) according to any one of the preceding claims, **characterized in that** the height of the recesses (22) and elevations (23) on each screening surface (9) is between 2 cm and 20 cm, preferably between 4 cm and 15 cm and particularly preferably between 6 cm and 10 cm, related to a level cross-section of the screening surface (9).

8. Screening device (1) according to any one of the preceding claims, **characterized in that** the ratio of the height of the recesses (22) and elevations (23), relative to a level cross-section of the screening surface (9), on each screening surface (9) to the distance between the recesses (22) and elevations (23) on the screening surface (9) is between 0.1 and 2, preferably between 0.2 and 1.5 and particularly preferably between 0.3 and 1.0.

9. Screening device (1) according to any one of the preceding claims, **characterized in that** the absolute value, averaged across the screening surface (9) of a screening panel (6), of the flank angle of the recesses (22) and elevations (23) of the screening surface (9) that is measured transversely to the longitudinal extension of the recesses (22) and elevations (23), with regard to a level cross-section of the screening surface (9) and not taking account of the sections of the screening surface (9) not running at an angle to a level cross-section of the screening surface (9), is between 10° and 80°, preferably between 20° and 70° and particularly preferably between 30° and 60°.

10. Screening device (1) according to any one of the preceding claims, **characterized in that** the recesses (22) and elevations (23) of a screening surface (9) are linear.

11. Screening device (1) according to any one of the preceding claims, **characterized in that** the recesses (22) and elevations (23) of a screening surface (9) run in an arc.

12. Screening device (1) according to any one of the preceding claims, **characterized in that** the plane of the circulatory motion (7) of the screening panels (6) is arranged substantially perpendicular to the flow direction (4) of the stream of liquid (2).

13. Screening device (1) according to any one of the preceding claims, **characterized in that** the part of the circulating continuous screening belt (5) moving upwards and the part of the circulating continuous screening belt (5) moving downwards each cover roughly a right and left half of the stream of liquid (2).

14. Screening device (1) according to any one of the preceding claims, **characterized in that** in the cleaning area debris adhering to the screening surfaces (9) and extracted from the stream of liquid (2) is removed from the screening panels (6) by spraying of the screening panels (6) of the continuous screening belt (5) lifted out of the stream of liquid (2) by means of water or compressed air spray jets and is collected by a debris collecting sluice channel arranged on the side of the continuous screening belt (5) opposite the spray jets, and that the debris sprayed off is carried in the direction of the debris collecting sluice channel by the inclined flanks of the elevations (23) and/or recesses (22) in the screening surfaces (9).

15. Use of a screening device (1) according to any one of the preceding claims for mechanically separating and extracting solid elements, solid bodies or solid matter from the stream of liquid (2) of a liquid flowing in a sluice channel (3), in particular, as screen or filter grating for process, cooling water or effluent currents or for use in sewage treatment plants or hydroelectric power stations.

## Revendications

1. Dispositif de criblage (1) dévolu à la séparation et à l'expulsion mécaniques de composants solides, de corps solides ou de substances solides d'avec le flux (2) d'un liquide s'écoulant dans une canalisation (3), notamment grille de tamisage ou de filtration utilisée pour des écoulements de traitement ou de refroidissement ou pour des écoulements d'eaux usées, ou dans des installations d'épuration ou des centrales hydroélectriques, comprenant un certain nombre de zones de criblage (6) orientées, pour l'essentiel, transversalement par rapport à la direction (4) de l'écoulement du flux de liquide (2) et munies, à chaque fois, d'une surface de criblage (9) percée d'une multiplicité d'orifices (10),
lesdites zones de criblage (6) formant une bande de criblage (5) sans fin en révolution continue, pouvant être immergée en partie dans ledit flux de liquide (2) et dans laquelle plusieurs zones de criblage (6) placées en juxtaposition, se succédant mutuellement dans la direction de mouvement de ladite bande de criblage (5) sans fin, forment une surface commune de criblage dans la canalisation (3),
ainsi qu'un entraînement conçu pour entraîner ladite bande de criblage (5) sans fin en un mouvement (7) de révolution continue,
sachant que les zones de criblage (6) sont placées en succession mutuelle, dans la bande de criblage (5) sans fin, de façon telle que ledit mouvement (7) de révolution continue de ladite bande de criblage (5) sans fin soit maintenu, en totalité, à l'intérieur d'un plan unique, et sachant que les axes de pivotement, autour desquels des pivotements sont imprimés auxdites zones de criblage (6) en des points de renvoi (12, 13) de ladite bande de criblage (5) sans fin, occupent des emplacements perpendiculaires par rapport à ladite surface commune de criblage,
**caractérisé par le fait**
**qu'**il inclut des zones de criblage (6) dont la surface de criblage (9) comporte une multiplicité de renfoncements (22) et/ou de protubérances (23) s'étendant en juxtaposition mutuelle sur ladite surface de criblage (9),
et
**qu'**il inclut des zones de criblage (6) respectivement munies d'un sas à poissons, sur leur côté afflux, lequel sas à poissons est agencé et réalisé de telle sorte qu'il se trouve à l'extrémité inférieure dans les zones de criblage (6) à mouvement ascendant, qu'il forme à chaque fois, dans lesdites zones de criblage (6) effectuant un mouvement ascendant, un renfoncement récepteur qui est empli de liquide, est dédié à de la faune aquatique située dans la zone de criblage (6) considérée, est soulevé hors du flux de liquide (2) au cours du mouvement de la bande de criblage (5) sans fin conjointement à ladite zone de criblage (6), avec le liquide renfermé par ledit renfoncement récepteur et avec de la faune aquatique piégée dans ledit liquide, dans la direction de mouvement de ladite bande de criblage (5) sans fin, puis est déversé dans une rigole collectrice dans une zone de vidange dudit dispositif de criblage (1), dans la région supérieure du renvoi de ladite bande de criblage (5) sans fin, sous l'effet d'un basculement de ladite zone de criblage (6) et dudit renfoncement récepteur, ledit dispositif de criblage (1) présentant une zone de nettoyage qui est dotée d'un dispositif de pulvérisation, en vue de dissocier la crasse d'avec les surfaces de criblage (9), et qui est située derrière ladite zone de vidange, dans la direction du mouvement de ladite bande de criblage (5) sans fin, à une distance telle que les renfoncements récepteurs soient vidés avant qu'ils n'atteignent ladite zone de nettoyage.

2. Dispositif de criblage (1) selon la revendication 1, **caractérisé par le fait qu'**il inclut des zones de criblage (6) dont la surface de criblage (9) comporte une multiplicité de renfoncements (22) et de protubérances (23) s'étendant en juxtaposition mutuelle sur ladite surface de criblage (9), lesdits renfoncements (22) et lesdites protubérances (23) étant agencés avec juxtaposition alternée sur ladite surface de criblage (9).

3. Dispositif de criblage (1) selon l'une des revendications précédentes, **caractérisé par le fait que** la section transversale des renfoncements (22) et des protubérances (23) est de réalisation en forme d'ondulations, du type ondulations, en forme de dents de scie, ou avec pliage trapézoïdal sur les surfaces de criblage (9).

4. Dispositif de criblage (1) selon l'une des revendications précédentes, **caractérisé par le fait que** le nombre des renfoncements (22) ou des protubérances (23), sur une surface de criblage (9) considérée, est compris entre 3 et 50, de préférence entre 4 et 40, et entre 5 et 30 avec préférence particulière.

5. Dispositif de criblage (1) selon l'une des revendications précédentes, **caractérisé par le fait que** le nombre des renfoncements (22) ou des protubérances (23), sur une surface de criblage (9) considérée, est compris entre 2 et 20 par mètre, de préférence entre 2,5 et 10 par mètre, et entre 3 et 5 par mètre avec préférence particulière, rapporté à une section transversale plane de ladite surface de criblage (9) et mesuré dans une direction transversale par rapport à l'étendue longitudinale respective desdits renfoncements (22), ou desdites protubérances (23).

6. Dispositif de criblage (1) selon l'une des revendications précédentes, **caractérisé par le fait que** la distance séparant les renfoncements (22) et les protubérances (23), sur une surface de criblage (9) considérée, mesure entre 5 cm et 50 cm, de préférence entre 10 cm et 40 cm, et entre 20 cm et 30 cm avec préférence particulière.

7. Dispositif de criblage (1) selon l'une des revendications précédentes, **caractérisé par le fait que** la hauteur des renfoncements (22) et des protubérances (23), sur une surface de criblage (9) considérée, mesure entre 2 cm et 20 cm, de préférence entre 4 cm et 15 cm, et entre 6 cm et 10 cm avec préférence particulière, rapportée à une section transversale plane de ladite surface de criblage (9).

8. Dispositif de criblage (1) selon l'une des revendications précédentes, **caractérisé par le fait que** la relation entre la hauteur des renfoncements (22) et des protubérances (23) sur une surface de criblage (9) considérée, rapportée à une section transversale plane de ladite surface de criblage (9), et la distance séparant lesdits renfoncements (22) et lesdites protubérances (23), sur ladite surface de criblage (9), est comprise entre 0,1 et 2, de préférence entre 0,2 et 1,5, et entre 0,3 et 1,0 avec préférence particulière.

9. Dispositif de criblage (1) selon l'une des revendications précédentes, **caractérisé par le fait que** la valeur absolue, moyennée sur la surface de criblage (9) d'une zone de criblage (6), de l'angle de flanc des renfoncements (22) et des protubérances (23) de ladite surface de criblage (9), mesuré transversalement par rapport à l'étendue longitudinale desdits renfoncements (22) et desdites protubérances (23), mesure entre 10° et 80°, de préférence entre 20° et 70°, et entre 30° et 60° avec préférence particulière, rapportée à une section transversale plane de ladite surface de criblage (9) et sans prise en compte des régions de ladite surface de criblage (9) s'étendant sans inclinaison par rapport à une section transversale plane de ladite surface de criblage (9).

10. Dispositif de criblage (1) selon l'une des revendications précédentes, **caractérisé par le fait que** les renfoncements (22) et les protubérances (23) d'une surface de criblage (9) sont rectilignes.

11. Dispositif de criblage (1) selon l'une des revendications précédentes, **caractérisé par le fait que** les renfoncements (22) et les protubérances (23) d'une surface de criblage (9) s'étendent en arc de cercle.

12. Dispositif de criblage (1) selon l'une des revendications précédentes, **caractérisé par le fait que** le plan du mouvement (7) de révolution continue des zones de criblage (6) est disposé, pour l'essentiel, perpendiculairement à la direction (4) de l'écoulement du flux de liquide (2).

13. Dispositif de criblage (1) selon l'une des revendications précédentes, **caractérisé par le fait que** la partie de la bande de criblage (5) sans fin en révolution continue, effectuant un mouvement ascendant, et la partie de ladite bande de criblage (5) sans fin en révolution continue qui effectue un mouvement descendant, couvrent approximativement une moitié respective de droite ou de gauche du flux de liquide (2).

14. Dispositif de criblage (1) selon l'une des revendications précédentes, **caractérisé par le fait que** de la crasse, adhérant aux surfaces de criblage (9) dans la zone de nettoyage et expulsée du flux de liquide (2), est chassée des zones de criblage (6) sous l'effet d'une pulvérisation, effectuée au moyen de buses de pulvérisation d'eau ou d'air comprimé, des zones de criblage (6) de la bande de criblage (5) sans fin qui sont soulevées hors dudit flux de liquide (2), puis est reçue par une rigole collectrice de crasse qui est situé du côté de ladite bande de criblage (5) sans fin opposée desdites buses de pulvérisation; et **par le fait que** ladite crasse, chassée par pulvérisation, est canalisée en direction de ladite rigole collectrice de crasse par les flancs inclinés des protubérances (23) et/ou des renfoncements (22) pratiqué(e)s dans lesdites surfaces de criblage (9).

15. Utilisation d'un dispositif de criblage (1) conforme à l'une des revendications précédentes, dévolu à la séparation et à l'expulsion mécaniques de composants solides, de corps solides ou de substances solides d'avec le flux (2) d'un liquide s'écoulant dans une canalisation (3), notamment en tant que grille de tamisage ou de filtration utilisée pour un écoulement de traitement, de refroidissement ou d'eaux usées, ou dans une installation d'épuration ou une centrale hydroélectrique.
